# EUROPEAN PATENT APPLICATION

(11) **EP 4 485 978 A1**
(43) Date of publication of application: **01.01.2025**
(21) Application number: 23773885.1
(22) Date of filing: 22.03.2023
(51) Int. Cl.: H04W 4/02

(54) **COMMUNICATION METHOD AND COMMUNICATION APPARATUS**

(30) Priority: 22.03.2022 CN 202210283823
(71) Applicant: Huawei Technologies Co., Ltd., Shenzhen, Guangdong 518129 (CN)
(72) Inventor: HUANG, Su, Shenzhen, Guangdong 518129 (CN); LIU, Mengting, Shenzhen, Guangdong 518129 (CN); YU, Yingjie, Shenzhen, Guangdong 518129 (CN)
(74) Representative: Maiwald GmbH
(86) International application number: PCT/CN2023/082959
(87) International publication number: WO 2023/179638

(57) **Abstract**

This application provides a communication method and a communication apparatus, to improve positioning precision of a terminal device. In the method, the terminal device receives first configuration information, where the first configuration information is used to configure n sounding reference signals, the sounding reference signals are used for positioning, a carrier corresponding to at least one of the n sounding reference signals is a positioning carrier, and n is an integer greater than 1. The terminal device sends the n sounding reference signals based on the first configuration information, where the n sounding reference signals are carried in a same time domain resource unit. In some embodiments, a signal received by a receiving end of the n sounding reference signals is a signal obtained by performing carrier aggregation on the n sounding reference signals on n corresponding carriers. A characteristic of bandwidth aggregation of different carriers is used, so that the receiving end of the n sounding reference signals can obtain a more accurate positioning measurement result in a carrier aggregation (carrier aggregation, CA) positioning manner.

## Description

This application claims priority to Chinese Patent Application No. 202210283823.4, filed with the China National Intellectual Property Administration on March 22, 2022 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

In a mobile communication system, positioning is one of important functions. In a positioning implementation process, a terminal device may send, to a network device, a reference signal used for positioning, so that the network device performs measurement based on the reference signal used for the positioning to obtain a measurement result, to position the terminal device.

Currently, it is usually considered that positioning precision of the terminal device mostly depends on a bandwidth of a carrier occupied by the reference signal used for the positioning. That is, a larger bandwidth of the carrier occupied by the reference signal may indicate higher positioning precision obtained by the network device based on the reference signal. Conversely, a smaller bandwidth of the carrier occupied by the reference signal may indicate lower positioning precision obtained by the network device based on the reference signal.

However, because the reference signal used for the positioning and another signal (for example, data or control signaling) that are sent by the terminal device are usually carried on the same carrier, the bandwidth of the carrier occupied by the reference signal used for the positioning decreases or even is preempted. Therefore, how to improve positioning precision is a technical problem that urgently needs to be resolved.

### SUMMARY

This application provides a communication method and a communication apparatus, to improve positioning precision of a terminal device.

A first aspect of embodiments of this application provides a communication method. The method is performed by a terminal device, or the method is performed by some components (for example, a processor, a chip, or a chip system) in the terminal device, or the method may be implemented by a logical module or software that can implement all or some functions of the terminal device. In the first aspect and the possible implementation of the first aspect, an example in which the communication method is performed by the terminal device is used for description. In the method, the terminal device receives first configuration information, where the first configuration information is used to configure n sounding reference signals, the sounding reference signals are used for positioning, a carrier corresponding to at least one of the n sounding reference signals is a positioning carrier, and n is an integer greater than 1.

Based on the foregoing technical solution, in the first configuration information received by the terminal device, the first configuration information is used to configure the n sounding reference signals used for the positioning, and the carrier corresponding to the at least one of the n sounding reference signals is the positioning carrier. Therefore, the terminal device may subsequently send the at least one of the n sounding reference signals on the positioning carrier based on the first configuration information. In this way, in a manner in which the positioning carrier carries the at least one sounding reference signal, a case in which a carrier bandwidth decreases or even the carrier is preempted because the reference signal used for the positioning and another signal (for example, data or control signaling) are carried on the same carrier can be avoided, to improve positioning precision of the terminal device.

It should be understood that, in this application, the first configuration information is used to configure the n sounding reference signals, which may alternatively be expressed as that the first configuration information is used to configure the n signals used for the positioning. A name of this signal used for the positioning in a current communication system may be a sounding reference signal (sounding reference signal, SRS). In a future communication system, a name of the SRS may change with evolution of the communication system.

In addition, in this application, the "positioning carrier" may also be referred to as a carrier dedicated to positioning, a carrier used for positioning, a sounding reference signal-only carrier (SRS-only carrier), a positioning dedicated carrier (positioning dedicated carrier), a positioning dedicated uplink carrier (positioning dedicated UL carrier), a positioning secondary cell, a sounding signal dedicated secondary cell, or another name. This is not limited herein. It needs to be noted that, in this application, that the positioning carrier is on a frequency division duplex spectrum (frequency division duplex spectrum, FDD spectrum, also referred to as a paired spectrum in a protocol) means that communication (PDCCH/PDSCH) receiving is not configured on a downlink carrier, and communication (PUCCH/PUSCH) sending is not configured on an uplink carrier; and the positioning carrier is on a time division duplex spectrum (time division duplex spectrum, TDD spectrum, also referred to as an unpaired spectrum in the protocol) and an unlicensed TDD spectrum (Unlicensed spectrum, also referred to as a shared access spectrum in the protocol) means that communication (PDCCH/PDSCH) receiving is not configured when the carrier is used for downlink, and communication (PUCCH/PUSCH) sending is not configured when the carrier is used for uplink.

In a possible implementation of the first aspect, the terminal device sends the n sounding reference signals based on the first configuration information, where the n sounding reference signals are carried in a same time domain resource unit.

Based on the foregoing technical solution, after receiving the first configuration information, the terminal device sends the n sounding reference signals in the same time domain resource unit based on the first configuration information, so that a receiving end of the n sounding reference signals can perform measurement based on the n sounding reference signals, to position the terminal device. In other words, a signal received by the receiving end of the n sounding reference signals is a signal obtained by performing carrier aggregation on the n sounding reference signals on n corresponding carriers. A characteristic of bandwidth aggregation of different carriers is used, so that the receiving end of the n sounding reference signals can obtain a more accurate positioning measurement result in a carrier aggregation (carrier aggregation, CA) positioning manner.

It needs to be noted that, in this application, a network device that sends the first configuration information to the terminal device and a network device that receives the n sounding reference signals may be a same network device or different network devices. This is not limited herein.

Optionally, in the same time domain resource unit, the time domain resource unit may be a symbol, a slot, a subframe, a frame, or another time domain resource unit. This is not limited herein.

In a possible implementation of the first aspect, before that the terminal device receives first configuration information, the method further includes: The terminal device sends first information, where the first information indicates capability information of the terminal device.

Based on the foregoing technical solution, the terminal device may further send the first information indicating the capability information of the terminal device, so that after receiving the first information, the network device may determine a capability of the terminal device based on the first information, and use the first information as one of bases for determining the first configuration information.

In a possible implementation of the first aspect, the first information includes at least one of the following:
first indication information, indicating a first maximum aggregated bandwidth, where the first maximum aggregated bandwidth is used to send m sounding reference signals, the m sounding reference signals are used for positioning, a carrier corresponding to at least one of the m sounding reference signals is a positioning carrier, the m sounding reference signals are configured to be carried in the same time domain resource unit, and m is an integer greater than 1;
second indication information, indicating a quantity of contiguous carriers corresponding to a first maximum aggregated bandwidth;
third indication information, indicating that the terminal device supports uplink carrier aggregation (uplink carrier aggregation, UL CA), and a carrier set corresponding to the UL CA includes at least one positioning carrier;
fourth indication information, indicating first switching time, where the first switching time is used for switching between sending a signal by the terminal device on a first carrier set and sending a sounding reference signal on a second carrier set, the first carrier set does not include a positioning carrier, and the second carrier set includes at least one positioning carrier;
fifth indication information, indicating that the terminal device does not send m sounding reference signals when a conflict occurs on a carrier corresponding to one or more of the m sounding reference signals in the same time domain resource unit; or
sixth indication information, indicating that the terminal device does not send one or more sounding reference signals when a conflict occurs on a carrier corresponding to the one or more of m sounding reference signals in the same time domain resource unit.

Based on the foregoing technical solution, the first information indicating the capability information of the terminal device may include the at least one of the foregoing, so that the network device determines, based on the first information, that the terminal device has the capability of sending the sounding reference signal on the positioning carrier, and delivers the first configuration information to the terminal device.

In a possible implementation of the first aspect, that the terminal device sends the n sounding reference signals based on the first configuration information includes: When no conflict occurs on the carrier corresponding to one or more of the n sounding reference signals in the same time domain resource unit, the terminal device sends the n sounding reference signals based on the first configuration information, where a first signal includes at least one of a physical downlink control channel (physical downlink control channel, PDCCH) signal, a physical downlink shared channel (physical downlink shared channel, PDSCH) signal, a physical uplink shared channel (physical uplink shared channel, PUSCH) signal, and a physical uplink control channel (physical uplink control channel, PUCCH).

Based on the foregoing technical solution, after receiving the first configuration information, the terminal device may need to send the n sounding reference signals based on the first configuration information. In this process, when determining that no conflict occurs on the carrier corresponding to the one or more of the n sounding reference signals in the same time domain resource unit, the terminal device may send the n sounding reference signals based on the first configuration information. In other words, when determining that the n sounding reference signals do not conflict with other scheduled signals (from the terminal device or another terminal device) on corresponding time-frequency domain resources, the terminal device sends the n sounding reference signals based on the first configuration information, to avoid a transmission failure of the n sounding reference signals when avoiding impact on transmission of the other scheduled signals.

In a possible implementation of the first aspect, the method further includes: When the conflict occurs on the carrier corresponding to the one or more of the n sounding reference signals in the same time domain resource unit, the terminal device determines not to send the n sounding reference signals.

Based on the foregoing technical solution, after receiving the first configuration information, the terminal device may not need to send the n sounding reference signals. In this process, when determining that the conflict occurs on the carrier corresponding to the one or more of the n sounding reference signals in the same time domain resource unit, the terminal device may determine not to send the n sounding reference signals. In other words, when determining that the n sounding reference signals conflict with other scheduled signals (from the terminal device or another terminal device) on corresponding time-frequency domain resources, the terminal device sends the first signal instead of the n sounding reference signals, to avoid impact on transmission of the other scheduled signals.

It needs to be noted that, if the "same time domain resource unit" is a same slot, subframe, or frame, the same time domain resource unit may include a plurality of symbols. In this case, that the terminal device determines not to send the n sounding reference signals may also be expressed as: The terminal device determines not to send the n sounding reference signals on a symbol on which a conflict occurs in the same time domain resource unit. In other words, the terminal device may send the n sounding reference signals on symbols on which no conflict occurs in the same time domain resource unit.

For example, if the same time domain resource unit is four symbols in a slot, but a conflict occurs only on one symbol, that the terminal device determines not to send the n sounding reference signals may also be expressed as: The terminal device determines not to send the n sounding reference signals on the symbol. In other words, the terminal device may further send the n sounding reference signals on the other three symbols.

In a possible implementation of the first aspect, the first configuration information further includes seventh indication information, and the seventh indication information indicates that the terminal device does not send the n sounding reference signals when a conflict occurs on a carrier corresponding to one or more of the n sounding reference signals in the same time domain resource unit.

It should be understood that, in this implementation, the seventh indication information may also be expressed as follows: The seventh indication information indicates that when the conflict occurs on the carrier corresponding to the one or more of the n sounding reference signals in the same time domain resource unit, the same time domain resource unit is not used to carry the n sounding reference signals.

Based on the foregoing technical solution, the first configuration information received by the terminal device may further include the seventh indication information, and the seventh indication information indicates that the terminal device does not send all of the n sounding reference signals when the conflict occurs on the carrier corresponding to the one or more of the n sounding reference signals in the same time domain resource unit. Therefore, after receiving the first configuration information, the terminal device determines, based on the seventh indication information, that the n sounding reference signals do not need to be sent when the n sounding reference signals conflict with other scheduled signals (from the terminal device or another terminal device) on corresponding time-frequency domain resources.

Optionally, the seventh indication information may alternatively be carried in another message different from the first configuration information. This is not limited herein.

In a possible implementation of the first aspect, the method further includes: When the conflict occurs on the carrier corresponding to the one or more of the n sounding reference signals in the same time domain resource unit, the terminal device determines not to send the one or more sounding reference signals.

Based on the foregoing technical solution, after receiving the first configuration information, the terminal device may not need to send the n sounding reference signals. In this process, when determining that the conflict occurs on the carrier corresponding to the one or more of the n sounding reference signals, the terminal device may determine not to send some of the n sounding reference signals, that is, the terminal device may determine not to send the one or more sounding reference signals. In other words, when determining that the one or more of the n sounding reference signals conflict with other scheduled signals (from the terminal device or another terminal device) on corresponding time-frequency domain resources, the terminal device (stops signal receiving and sending or) sends the other scheduled signals instead of the n sounding reference signals on the time-frequency domain resource corresponding to the one or more sounding reference signals, to avoid impact on transmission of the other scheduled signals.

In a possible implementation of the first aspect, the first configuration information further includes eighth indication information, and the eighth indication information indicates that the terminal device does not send the one or more sounding reference signals when the conflict occurs on the carrier corresponding to the one or more of the n sounding reference signals in the same time domain resource unit.

It should be understood that, in this implementation, the eighth indication information may also be expressed as follows: The eighth indication information indicates that when the conflict occurs on the carrier corresponding to the one or more of the n sounding reference signals in the same time domain resource unit, the same time domain resource unit is not used to carry the one or more sounding reference signals.

Based on the foregoing technical solution, the first configuration information received by the terminal device may further include the eighth indication information, and the eighth indication information indicates that the terminal device does not send the one or more sounding reference signals when the conflict occurs on the carrier corresponding to the one or more of the n sounding reference signals in the same time domain resource unit. Therefore, after receiving the first configuration information, the terminal device determines, based on the eighth indication information, that the one or more sounding reference signals do not need to be sent when the one or more sounding reference signals conflict with other scheduled signals (from the terminal device or another terminal device) on corresponding time-frequency domain resources.

Optionally, the eighth indication information may alternatively be carried in another message different from the first configuration information. This is not limited herein.

In a possible implementation of the first aspect, the method further includes: The terminal device receives second information, where the second information includes at least one of the following:
ninth indication information, where the ninth indication information indicates that at least one symbol corresponding to the same time domain resource unit is a flexible symbol; or
tenth indication information, where the tenth indication information indicates that at least one symbol corresponding to the same time domain resource unit is preempted.

The terminal device determines, based on the second information, that the conflict occurs on the carrier corresponding to the one or more of the n sounding reference signals in the same time domain resource unit.

Based on the foregoing technical solution, the terminal device may further receive the second information including the at least one piece of information, so that the terminal device determines, based on the at least one piece of information, that the conflict occurs on the carrier corresponding to the one or more of the n sounding reference signals in the same time domain resource unit, and determines whether to send the n sounding reference signals (or determines whether to send the one or more sounding reference signals).

In a possible implementation of the first aspect, the method further includes: The terminal device receives eleventh indication information, where the eleventh indication information indicates to transmit a first signal on the carrier corresponding to the one or more of the n sounding reference signals, and the first signal includes at least one of a physical downlink control channel PDCCH signal, a physical downlink shared channel PDSCH signal, a physical uplink shared channel PUSCH signal, and a physical uplink control channel PUCCH. The terminal device determines a first symbol set, where the first symbol set is a symbol occupied by the first signal or the first symbol set is a union set of the symbol occupied by the first signal and a switching symbol, the switching symbol is located before the symbol occupied by the first signal or after the symbol occupied by the first signal, and a quantity of switching symbols is determined by the first switching time. When the first symbol set includes at least one symbol corresponding to the same time domain resource unit, the terminal device determines that the conflict occurs on the carrier corresponding to the one or more of the n sounding reference signals in the same time domain resource unit.

It needs to be noted that the first switching time is used for switching between sending a signal by the terminal device on a first carrier set and sending a sounding reference signal on a second carrier set, the first carrier set does not include the positioning carrier, and the second carrier set includes the at least one positioning carrier.

Based on the foregoing technical solution, the terminal device may further receive the eleventh indication information indicating to transmit the first signal on the carrier corresponding to the one or more of the n sounding reference signals, and further determines the first symbol set based on the eleventh indication information. The first symbol set is the symbol occupied by the first signal or the first symbol set is the union set of the symbol occupied by the first signal and the switching symbol. In addition, when the first symbol set includes the at least one symbol corresponding to the same time domain resource unit, to avoid impact on transmission of the first signal, the terminal device determines that the conflict occurs on the carrier corresponding to the one or more of the n sounding reference signals in the same time domain resource unit, and determines whether to send the n sounding reference signals (or determines whether to send the one or more sounding reference signals).

It should be understood that the eleventh indication information may be semi-static configuration information (for example, a radio resource control (radio resource control, RRC) configuration), or may be dynamic scheduling information (for example, downlink control information (downlink control information, DCI) scheduling). This is not limited herein.

In a possible implementation of the first aspect, the positioning carrier is not used to transmit the PDCCH signal, the PDSCH signal, the PUSCH signal, or the PUCCH signal.

In a possible implementation of the first aspect, the positioning carrier is only used to transmit the sounding reference signal; or the positioning carrier is only used to transmit the sounding reference signal and a physical random access channel (physical random access channel, PRACH) signal.

Based on the foregoing technical solution, the carrier corresponding to the at least one of the n sounding reference signals configured by using the first configuration information is the positioning carrier, and the positioning carrier is not used to transmit the PDCCH signal, the PDSCH signal, the PUSCH signal, or the PUCCH signal, that is, the positioning carrier does not need to adapt to receiving and sending of the PDCCH signal, the PDSCH signal, the PUSCH signal, and the PUCCH signal. Therefore, for the terminal device, on a radio frequency module, the terminal device only needs to support receiving and sending of a signal (where the signal includes the sounding reference signal, or the signal includes the sounding reference signal and the PRACH signal) on the positioning carrier, and on a baseband processing module, the terminal device may have a simple baseband signal processing capability instead of a capability of processing complex signals such as the PDCCH signal, the PDSCH signal, the PUSCH signal, and the PUCCH signal on the carrier, to simplify or save the baseband processing capability of the terminal device, and implement low-cost carrier aggregation (carrier aggregation, CA) positioning.

Similarly, for the network device, on a radio frequency module, the network device only needs to support receiving and sending of a signal (where the signal includes the sounding reference signal, or the signal includes the sounding reference signal and the PRACH signal) on the positioning carrier, and on a baseband processing module, the network device may have a simple baseband signal processing capability instead of a capability of processing complex signals such as the PDCCH signal, the PDSCH signal, the PUSCH signal, and the PUCCH signal on the carrier, to simplify or save the baseband processing capability of the network device, and implement low-cost CA positioning.

In a possible implementation of the first aspect, n carriers corresponding to the n sounding reference signals are located in a same band (band).

Based on the foregoing technical solution, because different carriers located in the same band are usually in collocated deployment (collocated deployment) (or referred to as co-location), it may be considered that uplink and downlink timing of the different carriers located in the same band is synchronous, so that the n sounding reference signals sent by the terminal device can share same synchronization information, to reduce overheads.

Optionally, when n is greater than or equal to 3, at least two of the n carriers corresponding to the n sounding reference signals are located in the same band (band).

In a possible implementation of the first aspect, the n sounding reference signals share an antenna port or the n sounding reference signals have a phase difference.

Based on the foregoing technical solution, when the terminal device sends the n sounding reference signals, the n sounding reference signals share the antenna port or the n sounding reference signals have the phase difference, so that the receiving end of the n sounding reference signals can obtain a more accurate positioning measurement result in a carrier aggregation (carrier aggregation, CA) positioning manner by using a characteristic of bandwidth aggregation of the different carriers.

It should be understood that, in this application, that the n sounding reference signals share an antenna port means that channel states of the n sounding reference signals may be mutually inferred. In the protocol (TS 38.211), the antenna port is defined as follows: An antenna port is defined such that the channel over which a symbol on the antenna port is conveyed can be inferred from the channel over which another symbol on the same antenna port is conveyed (An antenna port is defined such that the channel over which a symbol on the antenna port is conveyed can be inferred from the channel over which another symbol on the same antenna port is conveyed).

It needs to be noted that, the foregoing manner may also be expressed as follows: A channel over which a symbol on which an antenna port is located is transferred (by using a reference signal or over a physical layer channel) may be inferred from a channel over which a symbol on which the same antenna port is located is transferred (by using a reference signal or over a physical layer channel). In other words, the channels over which the two symbols are transferred may be mutually inferred. In this case, the two symbols correspond to the same antenna port. That two reference signals correspond to the same antenna port means that the symbols to which the two reference signals are mapped correspond to the same antenna port.

Optionally, the two signals share the antenna port (correspond to the same antenna port), which is a strictest requirement for the two signals in the protocol. Usually, the two signals are sent through same precoding by using a same physical antenna or a same physical antenna set, and in this process, no radio frequency phase jump occurs, that is, the channels of the two signals are completely the same. In addition, the protocol allows a specific degree of relaxation on "the channels of the two signals are completely the same". For example, a channel phase change on different symbols caused by a Doppler shift when a terminal moves at a high speed or there is a small residual frequency offset from a transmit/receive radio frequency, which may also be considered as a same port. In this case, the receiving end needs to estimate the residual Doppler frequency based on assumption of the same port, and the channels may be considered as completely the same after elimination.

Optionally, that the n sounding signals have a phase difference refers to a relationship that is lower than a same port requirement. Currently, the protocol does not define this concept. An example in which a value of n is 2 is used. That two signals have a "phase difference" specifically means that, in addition to a specific fixed random phase difference between the two signals, channels may be mutually inferred. This case specifically corresponds to that the two signals are sent through same precoding by using a same physical antenna or a same physical antenna set, and in this process, a radio frequency phase jump may exist between the two signals, that is, the channels of the two signals are completely the same except random radio frequency phases. A main reason for the radio frequency phase jump is that the two signals use independent local oscillators for up-conversion or down-conversion, and the two independent local oscillators do not have a consistent or stable initial phase. This causes the phase difference between the two signals. Similar relaxation is also allowed when Doppler exists.

It should be noted that having the phase difference and Doppler are both visually phase changes, but are different from each other. Doppler is mainly used to describe a case that a phase of two signals on a same frequency (for example, a same CC/BWP) basically changes linearly with time. The phase difference is mainly used to describe a case that a phase of two signals on different frequencies (for example, different CCsBWPs) does not change linearly with the time.

A second aspect of this application provides a communication method. The method is performed by a network device, or the method is performed by some components (for example, a processor, a chip, or a chip system) in the network device, or the method may be implemented by a logical module or software that can implement all or some functions of the network device. In the second aspect and the possible implementation of the second aspect, an example in which the communication method is performed by the network device is used for description. In this method, the network device determines first configuration information, where the first configuration information is used to configure n sounding reference signals, the sounding reference signals are used for positioning, the n sounding reference signals are carried in a same time domain resource unit, a carrier corresponding to at least one of the n sounding reference signals is a positioning carrier, and n is an integer greater than 1. The network device sends the first configuration information.

Based on the foregoing technical solution, in the first configuration information determined by the network device, the first configuration information is used to configure the n sounding reference signals used for the positioning, and the carrier corresponding to the at least one of the n sounding reference signals is the positioning carrier. Therefore, after receiving the first configuration information, a terminal device may subsequently send the at least one of the n sounding reference signals on the positioning carrier based on the first configuration information. In this way, in a manner in which the positioning carrier carries the at least one sounding reference signal, a case in which a carrier bandwidth decreases or even the carrier is preempted because the reference signal used for the positioning and another signal (for example, data or control signaling) are carried on the same carrier can be avoided, to improve positioning precision of the terminal device.

In addition, because the n sounding reference signals are carried in the same time domain resource unit, a signal sent by the terminal device is a signal obtained by performing carrier aggregation on the n sounding reference signals on n corresponding carriers. A characteristic of bandwidth aggregation of different carriers is used, so that the receiving end of the n sounding reference signals can obtain a more accurate positioning measurement result in a carrier aggregation (carrier aggregation, CA) positioning manner.

It should be understood that, in this application, the first configuration information is used to configure the n sounding reference signals, which may alternatively be expressed as that the first configuration information is used to configure the n signals used for the positioning. A name of this signal used for the positioning in a current communication system may be a sounding reference signal (sounding reference signal, SRS). In a future communication system, a name of the SRS may change with evolution of the communication system.

In addition, the network device that sends the first configuration information to the terminal device and a network device that receives the n sounding reference signals may be a same network device or different network devices. This is not limited herein.

Optionally, in the same time domain resource unit, the time domain resource unit may be a symbol, a slot, a subframe, a frame, or another time domain resource unit. This is not limited herein.

In a possible implementation of the second aspect, before that the network device sends the first configuration information, the method further includes: The network device receives first information, where the first information indicates capability information of the terminal device. The network device determines the first configuration information based on the first information.

Based on the foregoing technical solution, the network device may further receive the first information indicating the capability information of the terminal device, so that after receiving the first information, the network device may determine a capability of the terminal device based on the first information, and use the first information as one of bases for determining the first configuration information.

In a possible implementation of the second aspect, the first information includes at least one of the following:
first indication information, indicating a first maximum aggregated bandwidth, where the first maximum aggregated bandwidth is used to send m sounding reference signals, the m sounding reference signals are used for positioning, a carrier corresponding to at least one of the m sounding reference signals is a positioning carrier, the m sounding reference signals are configured to be carried in the same time domain resource unit, and m is an integer greater than 1;
second indication information, indicating a quantity of contiguous carriers corresponding to a first maximum aggregated bandwidth;
third indication information, indicating that the terminal device supports uplink carrier aggregation (uplink carrier aggregation, UL CA), and a carrier set corresponding to the UL CA includes at least one positioning carrier;
fourth indication information, indicating first switching time, where the first switching time is used for switching between sending a signal by the terminal device on a first carrier set and sending a sounding reference signal on a second carrier set, the first carrier set does not include a positioning carrier, and the second carrier set includes at least one positioning carrier;
fifth indication information, indicating that the terminal device does not send m sounding reference signals when a conflict occurs on a carrier corresponding to one or more of the m sounding reference signals in the same time domain resource unit; or
sixth indication information, indicating that the terminal device does not send one or more sounding reference signals when a conflict occurs on a carrier corresponding to the one or more of m sounding reference signals in the same time domain resource unit.

Based on the foregoing technical solution, the first information indicating the capability information of the terminal device may include the at least one of the foregoing, so that the network device determines, based on the first information, that the terminal device has the capability of sending the sounding reference signal on the positioning carrier, and delivers the first configuration information to the terminal device.

In a possible implementation of the second aspect, the first configuration information further includes seventh indication information, and the seventh indication information indicates that the terminal device does not send the n sounding reference signals when a conflict occurs on a carrier corresponding to one or more of the n sounding reference signals in the same time domain resource unit.

It should be understood that, in this implementation, the seventh indication information may also be expressed as follows: The seventh indication information indicates that when the conflict occurs on the carrier corresponding to the one or more of the n sounding reference signals in the same time domain resource unit, the same time domain resource unit is not used to carry the n sounding reference signals.

Based on the foregoing technical solution, the first configuration information sent by the network device may further include the seventh indication information, and the seventh indication information indicates that the terminal device does not send all of the n sounding reference signals when the conflict occurs on the carrier corresponding to the one or more of the n sounding reference signals in the same time domain resource unit. Therefore, after receiving the first configuration information, the terminal device determines, based on the seventh indication information, that the n sounding reference signals do not need to be sent when the n sounding reference signals conflict with other scheduled signals (from the terminal device or another terminal device) on corresponding time-frequency domain resources.

In a possible implementation of the second aspect, the first configuration information further includes eighth indication information, and the eighth indication information indicates that the terminal device does not send the one or more sounding reference signals when the conflict occurs on the carrier corresponding to the one or more of the n sounding reference signals in the same time domain resource unit.

It should be understood that, in this implementation, the eighth indication information may also be expressed as follows: The eighth indication information indicates that when the conflict occurs on the carrier corresponding to the one or more of the n sounding reference signals in the same time domain resource unit, the same time domain resource unit is not used to carry the one or more sounding reference signals.

Based on the foregoing technical solution, the first configuration information sent by the network device may further include the eighth indication information, and the eighth indication information indicates that the terminal device does not send the one or more sounding reference signals when the conflict occurs on the carrier corresponding to the one or more of the n sounding reference signals in the same time domain resource unit. Therefore, after receiving the first configuration information, the terminal device determines, based on the eighth indication information, that the one or more sounding reference signals do not need to be sent when the one or more sounding reference signals conflict with other scheduled signals (from the terminal device or another terminal device) on corresponding time-frequency domain resources.

In a possible implementation of the second aspect, the method further includes:
The network device sends second information, where the second information includes at least one of the following:
ninth indication information, where the ninth indication information indicates that at least one symbol corresponding to the same time domain resource unit is a flexible symbol;
tenth indication information, where the tenth indication information indicates that at least one symbol corresponding to the same time domain resource unit is preempted; or
eleventh indication information, where the eleventh indication information indicates to transmit a first signal on the carrier corresponding to the one or more of the n sounding reference signals, and the first signal includes at least one of a physical downlink control channel PDCCH signal, a physical downlink shared channel PDSCH signal, a physical uplink shared channel PUSCH signal, and a physical uplink control channel PUCCH.

Based on the foregoing technical solution, the network device may further send the second information including the at least one piece of information, so that the terminal device determines, based on the at least one piece of information, that the conflict occurs on the carrier corresponding to the one or more of the n sounding reference signals in the same time domain resource unit, and determines whether to send the n sounding reference signals (or determines whether to send the one or more sounding reference signals).

In a possible implementation of the second aspect, the positioning carrier is not used to transmit the PDCCH signal, the PDSCH signal, the PUSCH signal, or the PUCCH signal.

In a possible implementation of the second aspect, the positioning carrier is only used to transmit the sounding reference signal; or the positioning carrier is only used to transmit the sounding reference signal and a physical random access channel (physical random access channel, PRACH) signal.

Based on the foregoing technical solution, the carrier corresponding to the at least one of the n sounding reference signals configured by using the first configuration information is the positioning carrier, and the positioning carrier is not used to transmit the PDCCH signal, the PDSCH signal, the PUSCH signal, or the PUCCH signal, that is, the positioning carrier does not need to adapt to receiving and sending of the PDCCH signal, the PDSCH signal, the PUSCH signal, and the PUCCH signal. Therefore, for the terminal device, on a radio frequency module, the terminal device only needs to support receiving and sending of a signal (where the signal includes the sounding reference signal, or the signal includes the sounding reference signal and the PRACH signal) on the positioning carrier, and on a baseband processing module, the terminal device may have a simple baseband signal processing capability instead of a capability of processing complex signals such as the PDCCH signal, the PDSCH signal, the PUSCH signal, and the PUCCH signal on the carrier, to simplify or save the baseband processing capability of the terminal device, and implement low-cost carrier aggregation (carrier aggregation, CA) positioning.

Similarly, for the network device, on a radio frequency module, the network device only needs to support receiving and sending of a signal (where the signal includes the sounding reference signal, or the signal includes the sounding reference signal and the PRACH signal) on the positioning carrier, and on a baseband processing module, the network device may have a simple baseband signal processing capability instead of a capability of processing complex signals such as the PDCCH signal, the PDSCH signal, the PUSCH signal, and the PUCCH signal on the carrier, to simplify or save the baseband processing capability of the network device, and implement low-cost CA positioning.

In a possible implementation of the second aspect, n carriers corresponding to the n sounding reference signals are located in a same band.

Based on the foregoing technical solution, because different carriers located in the same band are usually in collocated deployment (collocated deployment) (or referred to as co-location), it may be considered that uplink and downlink timing of the different carriers located in the same band is synchronous, so that the n sounding reference signals sent by the terminal device can share same synchronization information, to reduce overheads.

Optionally, when n is greater than or equal to 3, at least two of the n carriers corresponding to the n sounding reference signals are located in the same band (band).

In a possible implementation of the second aspect, the n sounding reference signals share an antenna port or the n sounding reference signals have a phase difference.

Based on the foregoing technical solution, when the terminal device sends the n sounding reference signals, the n sounding reference signals share the antenna port or the n sounding reference signals have the phase difference, so that the receiving end of the n sounding reference signals can obtain a more accurate positioning measurement result in a carrier aggregation (carrier aggregation, CA) positioning manner by using a characteristic of bandwidth aggregation of the different carriers.

It should be understood that, in this application, that the n sounding reference signals share an antenna port means that channel states of the n sounding reference signals may be mutually inferred. In the protocol (TS 38.211), the antenna port is defined as follows: An antenna port is defined such that the channel over which a symbol on the antenna port is conveyed can be inferred from the channel over which another symbol on the same antenna port is conveyed (An antenna port is defined such that the channel over which a symbol on the antenna port is conveyed can be inferred from the channel over which another symbol on the same antenna port is conveyed).

It needs to be noted that, the foregoing manner may also be expressed as follows: A channel over which a symbol on which an antenna port is located is transferred (by using a reference signal or over a physical layer channel) may be inferred from a channel over which a symbol on which the same antenna port is located is transferred (by using a reference signal or over a physical layer channel). In other words, the channels over which the two symbols are transferred may be mutually inferred. In this case, the two symbols correspond to the same antenna port. That two reference signals correspond to the same antenna port means that the symbols to which the two reference signals are mapped correspond to the same antenna port.

Optionally, the two signals share the antenna port (correspond to the same antenna port), which is a strictest requirement for the two signals in the protocol. Usually, the two signals are sent through same precoding by using a same physical antenna or a same physical antenna set, and in this process, no radio frequency phase jump occurs, that is, the channels of the two signals are completely the same. In addition, the protocol allows a specific degree of relaxation on "the channels of the two signals are completely the same". For example, a channel phase change on different symbols caused by a Doppler shift when a terminal moves at a high speed or there is a small residual frequency offset from a transmit/receive radio frequency, which may also be considered as a same port. In this case, the receiving end needs to estimate the residual Doppler frequency based on assumption of the same port, and the channels may be considered as completely the same after elimination.

Optionally, that the n sounding signals have a phase difference refers to a relationship that is lower than a same port requirement. Currently, the protocol does not define this concept. An example in which a value of n is 2 is used. That two signals have a "phase difference" specifically means that, in addition to a specific fixed random phase difference between the two signals, channels may be mutually inferred. This case specifically corresponds to that the two signals are sent through same precoding by using a same physical antenna or a same physical antenna set, and in this process, a radio frequency phase jump may exist between the two signals, that is, the channels of the two signals are completely the same except random radio frequency phases. A main reason for the radio frequency phase jump is that the two signals use independent local oscillators for up-conversion or down-conversion, and the two independent local oscillators do not have a consistent or stable initial phase. This causes the phase difference between the two signals. Similar relaxation is also allowed when Doppler exists.

It should be noted that having the phase difference and Doppler are both visually phase changes, but are different from each other. Doppler is mainly used to describe a case that a phase of two signals on a same frequency (for example, a same CC/BWP) basically changes linearly with time. The phase difference is mainly used to describe a case that a phase of two signals on different frequencies (for example, different CCsBWPs) does not change linearly with the time.

A third aspect of this application provides a communication apparatus. The apparatus may implement the method in any one of the first aspect or the possible implementations of the first aspect. The apparatus includes a corresponding unit or module configured to perform the method. The unit or module included in the apparatus can be implemented by software and/or hardware. For example, the apparatus may be a terminal device, or the apparatus may be a component (for example, a processor, a chip, or a chip system) in the terminal device, or the apparatus may be a logical module or software that can implement all or some functions of the terminal device.

The communication apparatus includes a transceiver unit and a processing unit.

The receiving unit is configured to receive first configuration information, where the first configuration information is used to configure n sounding reference signals, the sounding reference signals are used for positioning, a carrier corresponding to at least one of the n sounding reference signals is a positioning carrier, and n is an integer greater than 1.

The sending unit is configured to send the n sounding reference signals based on the first configuration information, where the n sounding reference signals are carried in a same time domain resource unit.

In a possible implementation of the third aspect, the sending unit is further configured to send first information, where the first information indicates capability information of the terminal device.

In a possible implementation of the third aspect, the first information includes at least one of the following:
first indication information, indicating a first maximum aggregated bandwidth, where the first maximum aggregated bandwidth is used to send m sounding reference signals, the m sounding reference signals are used for positioning, a carrier corresponding to at least one of the m sounding reference signals is a positioning carrier, the m sounding reference signals are configured to be carried in the same time domain resource unit, and m is an integer greater than 1;
second indication information, indicating a quantity of contiguous carriers corresponding to a first maximum aggregated bandwidth;
third indication information, indicating that the terminal device supports uplink carrier aggregation (uplink carrier aggregation, UL CA), and a carrier set corresponding to the UL CA includes at least one positioning carrier;
fourth indication information, indicating first switching time, where the first switching time is used for switching between sending a signal by the terminal device on a first carrier set and sending a sounding reference signal on a second carrier set, the first carrier set does not include a positioning carrier, and the second carrier set includes at least one positioning carrier;
fifth indication information, indicating that the terminal device does not send m sounding reference signals when a conflict occurs on a carrier corresponding to one or more of the m sounding reference signals in the same time domain resource unit; or
sixth indication information, indicating that the terminal device does not send one or more sounding reference signals when a conflict occurs on a carrier corresponding to the one or more of m sounding reference signals in the same time domain resource unit.

In a possible implementation of the third aspect, the apparatus further includes a processing unit.

When the processing unit determines that no conflict occurs on a carrier corresponding to one or more of the n sounding reference signals in the same time domain resource unit, the sending unit is specifically configured to send the n sounding reference signals based on the first configuration information, where the first signal includes at least one of a PDCCH signal, a PDSCH signal, a PUSCH signal, and a PUCCH.

In a possible implementation of the third aspect, when determining that a conflict occurs on the carrier corresponding to the one or more of the n sounding reference signals in the same time domain resource unit, the processing unit is configured to determine not to send the n sounding reference signals.

In a possible implementation of the third aspect, the first configuration information further includes seventh indication information, and the seventh indication information indicates that the terminal device does not send the n sounding reference signals when a conflict occurs on a carrier corresponding to any one of the n sounding reference signals in the same time domain resource unit.

In a possible implementation of the third aspect, when determining that a conflict occurs on the carrier corresponding to the one or more of the n sounding reference signals in the same time domain resource unit, the processing unit is further configured to determine not to send the one or more sounding reference signals.

In a possible implementation of the third aspect, the first configuration information further includes eighth indication information, and the eighth indication information indicates that the terminal device does not send the one or more sounding reference signals when the conflict occurs on the carrier corresponding to the one or more of the n sounding reference signals in the same time domain resource unit.

In a possible implementation of the third aspect, the receiving unit is further configured to receive second information, where the second information includes at least one of the following:
ninth indication information, where the ninth indication information indicates that at least one symbol corresponding to the same time domain resource unit is a flexible symbol; or
tenth indication information, where the tenth indication information indicates that at least one symbol corresponding to the same time domain resource unit is preempted.

The processing unit is further configured to determine, based on the second information, that the conflict occurs on the carrier corresponding to the one or more of the n sounding reference signals in the same time domain resource unit.

In a possible implementation of the third aspect, the receiving unit is further configured to receive eleventh indication information, where the eleventh indication information indicates to transmit the first signal on the carrier corresponding to the one or more of the n sounding reference signals, and the first signal includes the at least one of the physical downlink control channel PDCCH signal, the physical downlink shared channel PDSCH signal, the physical uplink shared channel PUSCH signal, and the physical uplink control channel PUCCH.

The processing unit is further configured to determine a first symbol set, where the first symbol set is a symbol occupied by the first signal or the first symbol set is a union set of the symbol occupied by the first signal and a switching symbol, the switching symbol is located before the symbol occupied by the first signal or after the symbol occupied by the first signal, and a quantity of switching symbols is determined by the first switching time.

When determining that the first symbol set includes at least one symbol corresponding to the same time domain resource unit, the processing unit determines that the conflict occurs on the carrier corresponding to the one or more of the n sounding reference signals in the same time domain resource unit.

In a possible implementation of the third aspect, the positioning carrier is not used to transmit the PDCCH signal, the PDSCH signal, the PUSCH signal, or the PUCCH signal.

In a possible implementation of the third aspect, the positioning carrier is only used to transmit the sounding reference signal; or
the positioning carrier is only used to transmit the sounding reference signal and a physical random access channel PRACH signal.

In a possible implementation of the third aspect, n carriers corresponding to the n sounding reference signals are located in a same band.

In a possible implementation of the third aspect, the n sounding reference signals share an antenna port or the n sounding reference signals have a phase difference.

In the third aspect of embodiments of this application, the composition modules of the communication apparatus may be further configured to perform the steps performed in the possible implementations of the first aspect, and achieve corresponding technical effects. For details, refer to the first aspect. Details are not described herein again.

A fourth aspect of this application provides a communication apparatus. The apparatus may implement the method in any one of the second aspect or the possible implementations of the second aspect. The apparatus includes a corresponding unit or module configured to perform the method. The unit or module included in the apparatus can be implemented by software and/or hardware. For example, the apparatus may be a network device, or the apparatus may be a component (for example, a processor, a chip, or a chip system) in the network device, or the apparatus may be a logical module or software that can implement all or some functions of the network device.

The communication apparatus includes a processing unit and a transceiver unit.

The processing unit is configured to determine first configuration information, where the first configuration information is used to configure n sounding reference signals, the sounding reference signals are used for positioning, the n sounding reference signals are carried in a same time domain resource unit, a carrier corresponding to at least one of the n sounding reference signals is a positioning carrier, and n is an integer greater than 1.

The transceiver unit is configured to send the first configuration information.

In a possible implementation of the fourth aspect, the transceiver unit is further configured to receive first information, where the first information indicates capability information of a terminal device.

The processing unit is further configured to determine the first configuration information based on the first information.

In a possible implementation of the fourth aspect, the first information includes at least one of the following:
first indication information, indicating a first maximum aggregated bandwidth, where the first maximum aggregated bandwidth is used to send m sounding reference signals, the m sounding reference signals are used for positioning, a carrier corresponding to at least one of the m sounding reference signals is a positioning carrier, the m sounding reference signals are configured to be carried in the same time domain resource unit, and m is an integer greater than 1;
second indication information, indicating a quantity of contiguous carriers corresponding to a first maximum aggregated bandwidth;
third indication information, indicating that the terminal device supports uplink carrier aggregation (uplink carrier aggregation, UL CA), and a carrier set corresponding to the UL CA includes at least one positioning carrier;
fourth indication information, indicating first switching time, where the first switching time is used for switching between sending a signal by the terminal device on a first carrier set and sending a sounding reference signal on a second carrier set, the first carrier set does not include a positioning carrier, and the second carrier set includes at least one positioning carrier;
fifth indication information, indicating that the terminal device does not send m sounding reference signals when a conflict occurs on a carrier corresponding to one or more of the m sounding reference signals in the same time domain resource unit; or
sixth indication information, indicating that the terminal device does not send one or more sounding reference signals when a conflict occurs on a carrier corresponding to the one or more of m sounding reference signals in the same time domain resource unit.

In a possible implementation of the fourth aspect, the first configuration information further includes seventh indication information, and the seventh indication information indicates that the terminal device does not send the n sounding reference signals when a conflict occurs on a carrier corresponding to one or more of the n sounding reference signals in the same time domain resource unit.

In a possible implementation of the fourth aspect, the first configuration information further includes eighth indication information, and the eighth indication information indicates that the terminal device does not send the one or more sounding reference signals when the conflict occurs on the carrier corresponding to the one or more of the n sounding reference signals in the same time domain resource unit.

In a possible implementation of the fourth aspect, the transceiver unit is further configured to send second information, where the second information includes at least one of the following:
ninth indication information, where the ninth indication information indicates that at least one symbol corresponding to the same time domain resource unit is a flexible symbol;
tenth indication information, where the tenth indication information indicates that at least one symbol corresponding to the same time domain resource unit is preempted; or
eleventh indication information, where the eleventh indication information indicates to transmit a first signal on the carrier corresponding to the one or more of the n sounding reference signals, and the first signal includes at least one of a physical downlink control channel PDCCH signal, a physical downlink shared channel PDSCH signal, a physical uplink shared channel PUSCH signal, and a physical uplink control channel PUCCH.

In a possible implementation of the fourth aspect, the positioning carrier is not used to transmit the PDCCH signal, the PDSCH signal, the PUSCH signal, or the PUCCH signal.

In a possible implementation of the fourth aspect, the positioning carrier is only used to transmit the sounding reference signal; or
the positioning carrier is only used to transmit the sounding reference signal and a physical random access channel PRACH signal.

In a possible implementation of the fourth aspect, n carriers corresponding to the n sounding reference signals are located in a same band.

In a possible implementation of the fourth aspect, the n sounding reference signals share an antenna port or the n sounding reference signals have a phase difference.

In the fourth aspect of embodiments of this application, the composition modules of the communication apparatus may be further configured to perform the steps performed in the possible implementations of the second aspect, and achieve corresponding technical effects. For details, refer to the second aspect. Details are not described herein again.

A fifth aspect of embodiments of this application provides a communication apparatus, including at least one processor. The at least one processor is coupled to a memory.

The memory is configured to store a program or instructions.

The at least one processor is configured to execute the program or the instructions, to enable the apparatus to implement the method according to any one of the first aspect or the possible implementations of the first aspect.

A sixth aspect of embodiments of this application provides a communication apparatus, including at least one processor. The at least one processor is coupled to a memory.

The memory is configured to store a program or instructions.

The at least one processor is configured to execute the program or the instructions, to enable the apparatus to implement the method according to any one of the second aspect or the possible implementations of the second aspect.

A seventh aspect of embodiments of this application provides a communication apparatus, including at least one logic circuit and an input/output interface.

The input/output interface is configured to input first configuration information.

The logic circuit is configured to perform the method according to the first aspect or any possible implementation of the first aspect.

An eighth aspect of embodiments of this application provides a communication apparatus, including at least one logic circuit and an input/output interface.

The input/output interface is configured to output first configuration information.

The logic circuit is configured to perform the method according to the second aspect or any possible implementation of the second aspect.

A ninth aspect of embodiments of this application provides a communication apparatus, including a radio frequency module and a baseband processing module.

Carriers corresponding to signals that can be received and sent by the radio frequency module include carriers of (k+p) frequency domain resource units, where both k and p are integers greater than or equal to 1.

On a carrier of k frequency domain resource units, the baseband processing module supports processing of a target signal and processing of a first signal, where the first signal includes a PDCCH signal, a PDSCH signal, a PUSCH signal, and a PUCCH signal.

On a carrier of p frequency domain resource units, the baseband processing module supports processing of the target signal, and the baseband processing module does not support processing of at least one of the PDCCH signal, the PDSCH signal, the PUSCH signal, and the PUCCH signal.

Carriers corresponding to n sounding reference signals are a subset of the carriers of the (k+p) frequency domain resource units. The apparatus is configured to perform the method according to any one of the first aspect or the possible implementations of the first aspect, or the apparatus is configured to perform the method according to any one of the second aspect or the possible implementations of the second aspect.

Based on the foregoing technical solution, in the communication apparatus, the carriers corresponding to the signals that can be received and sent by the radio frequency module include the carriers of the (k+p) frequency domain resource units, but on the carrier of the p frequency domain resource units, the baseband processing module does not support the processing of the at least one of the PDCCH signal, the PDSCH signal, the PUSCH signal, and the PUCCH signal, that is, a capability of the radio frequency module of the communication apparatus is redundant. In other words, the communication apparatus supports a full communication capability on the carrier of the k frequency domain resource units, but the communication apparatus supports only simple receiving and sending of the target signal on the carrier of the p frequency domain resource units, that is, the communication apparatus may have a simple baseband signal processing capability on the carrier of the p frequency domain resource units, to simplify or save the baseband processing capability of the communication apparatus, and implement low-cost CA positioning.

Optionally, the frequency domain resource unit may be a 10 megahertz (MHz), 50 MHz, 100 MHz, 500 MHz, or another frequency domain resource unit. This is not limited herein.

In a possible implementation of the ninth aspect, on the carrier of the p frequency domain resource units, the baseband processing module does not support the processing of the PDCCH signal, the PDSCH signal, the PUSCH signal, and the PUCCH signal.

In a possible implementation of the ninth aspect, the target signal includes only a sounding reference signal.

In a possible implementation of the ninth aspect, the target signal includes only a sounding reference signal and a PRACH signal.

It should be understood that, in this application, the sounding reference signal may alternatively be expressed as a signal used for positioning. A name of the signal used for the positioning in a current communication system may be a sounding reference signal (sounding reference signal, SRS). In a future communication system, a name of the SRS may change with evolution of the communication system.

In a possible implementation of the ninth aspect, the communication apparatus is a terminal device, or the apparatus may be a component (for example, a processor, a chip, or a chip system) in the terminal device, or the apparatus may be a logical module or software that can implement all or some functions of the terminal device.

Optionally, when the communication apparatus is the terminal device, for different terminal devices, the "(k+p) frequency domain resource units" may have different definitions.

For example, for a terminal device A, the carrier (denoted as a normal cell) of the "k frequency domain resource units" on which a baseband processing module of the terminal device A supports the processing of the target signal and the processing of the first signal may be a band 1, and the carrier (denoted as an "SRS-only" cell) of the "p frequency domain resource units" on which the terminal device A supports the processing of the target signal, and the baseband processing module does not support the processing of the at least one of the PDCCH signal, the PDSCH signal, the PUSCH signal, and the PUCCH signal may correspond to a band 2. For a terminal device B, a normal cell supported by a baseband processing module of the terminal device B may be a band 2, and an "SRS-only" cell supported by the baseband processing module of the terminal device B may correspond to a band 3. In this example, for the terminal device A, the band 2 is the "SRS-only" cell. In addition, for the terminal device B, the band 2 is the normal cell.

In a possible implementation of the ninth aspect, the communication apparatus is a network device, or the apparatus may be a component (for example, a processor, a chip, or a chip system) in the network device, or the apparatus may be a logical module or software that can implement all or some functions of the network device.

A tenth aspect of embodiments of this application provides a computer-readable storage medium. The computer-readable storage medium is configured to store one or more computer-executable instructions. When the computer-executable instructions are executed by a processor, the processor performs the method according to any one of the first aspect or the possible implementations of the first aspect, or the processor performs the method according to any one of the second aspect or the possible implementations of the second aspect.

An eleventh aspect of embodiments of this application provides a computer program product (or referred to as a computer program). When the computer program product is executed by a processor, the processor performs the method according to any one of the first aspect or the possible implementations of the first aspect, or the processor performs the method according to any one of the second aspect or the possible implementations of the second aspect.

A twelfth aspect of embodiments of this application provides a chip system. The chip system includes at least one processor, configured to support a communication apparatus in implementing a function according to any one of the first aspect or the possible implementations of the first aspect, or configured to support a communication apparatus in implementing a function according to any one of the second aspect or the possible implementations of the second aspect.

In a possible design, the chip system may further include a memory. The memory is configured to store program instructions and data that are necessary for the communication apparatus. The chip system may include a chip, or may include a chip and another discrete device. Optionally, the chip system further includes an interface circuit, and the interface circuit provides program instructions and/or data for the at least one processor.

A thirteenth aspect of embodiments of this application provides a communication system. The communication system includes the communication apparatus in the third aspect and the communication apparatus in the fourth aspect, and/or the communication system includes the communication apparatus in the fifth aspect and the communication apparatus in the sixth aspect, and/or the communication system includes the communication apparatus in the seventh aspect and the communication apparatus in the eighth aspect, and/or the communication system includes the communication apparatus in the ninth aspect.

For technical effects achieved by any design manner of the third aspect to the thirteenth aspect, refer to technical effects achieved by different implementations of the first aspect and the second aspect. Details are not described herein again.

It should be understood that, for a component in a device, the foregoing "sending" may be referred to as "output", and the foregoing "receiving" may be referred to as "input".

It can be learned from the foregoing technical solutions that embodiments of this application have the following beneficial effects: In a manner in which the positioning carrier carries the at least one sounding reference signal, a case in which a carrier bandwidth decreases or even the carrier is preempted because the reference signal used for the positioning and another signal (for example, data or control signaling) are carried on the same carrier can be avoided, to improve positioning precision of the terminal device. In addition, a signal received by the receiving end of the n sounding reference signals is a signal obtained by performing carrier aggregation on the n sounding reference signals on n corresponding carriers. A characteristic of bandwidth aggregation of different carriers is used, so that the receiving end of the n sounding reference signals can obtain a more accurate positioning measurement result in a carrier aggregation (carrier aggregation, CA) positioning manner.

### BRIEF DESCRIPTION OF DRAWINGS

FIG. 1 is a diagram of a network architecture according to this application;
FIG. 2a is another diagram of a network architecture according to this application;
FIG. 2b is another diagram of a network architecture according to this application;
FIG. 2c is another diagram of a network architecture according to this application;
FIG. 3a is another diagram of a network architecture according to this application;
FIG. 3b is another diagram of a network architecture according to this application;
FIG. 4 is a diagram of an SRS configuration manner according to this application;
FIG. 5 is another diagram of a communication method according to this application;
FIG. 6 is a diagram of a communication apparatus according to this application;
FIG. 7 is another diagram of a communication apparatus according to this application;
FIG. 8a is another diagram of a communication method according to this application;
FIG. 8b is another diagram of a communication method according to this application;
FIG. 9 is another diagram of a communication apparatus according to this application;
FIG. 10 is another diagram of a communication apparatus according to this application; and
FIG. 11 is another diagram of a communication apparatus according to this application.

### DESCRIPTION OF EMBODIMENTS

The following describes technical solutions in embodiments of this application with reference to the accompanying drawings in embodiments of this application. All other embodiments obtained by a person of ordinary skill in the art based on embodiments of this application without creative efforts shall fall within the protection scope of this application.

First, some terms in embodiments of this application are explained and described, to facilitate understanding of a person skilled in the art.
(1) Terminal device: may be a wireless terminal device that can receive scheduling and indication information of a network device. The wireless terminal device may be a device that provides voice and/or data connectivity for a user, a handheld device with a wireless connection function, or another processing device connected to a wireless modem.

The terminal device may communicate with one or more core networks or the Internet through a radio access network (radio access network, RAN). The terminal device may be a mobile terminal device such as a mobile phone (or referred to as a "cellular" phone or a mobile phone (mobile phone)), a computer, and a data card. For example, the terminal device may be a portable, pocket-sized, handheld, computer built-in, or in-vehicle mobile apparatus that exchanges a voice and/or data with the radio access network. For example, the terminal device may be a device such as a personal communications service (personal communications service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station (mobile station, MS), a remote station (remote station), an access point (access point, AP), a remote terminal (remote terminal) device, an access terminal (access terminal) device, a user terminal device (user terminal), a user agent (user agent), a subscriber station (subscriber station, SS), customer premises equipment (customer premises equipment, CPE), a terminal (terminal), user equipment (user equipment, UE), a mobile terminal (mobile terminal, MT), or the like. The terminal device may alternatively be a wearable device and a terminal device in a next generation communication system, for example, a terminal device in 5G communication system or a terminal device in a future evolved public land mobile network (public land mobile network, PLMN).

By way of example and not limitation, the terminal device in embodiments of this application may alternatively be a wearable device. The wearable device may also be referred to as a wearable intelligent device, an intelligent wearable device, or the like, and is a general term of wearable devices, for example, glasses, gloves, watches, clothes, and shoes, that are intelligently designed and developed for daily wear by using a wearable technology. The wearable device is a portable device that is directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices, for example, smart watches or smart glasses, that can implement all or some functions without depending on smartphones, and include devices, for example, various smart bands, smart helmets, or smart jewelry for monitoring physical signs, that focus on only one type of application functions and need to collaboratively work with other devices such as smartphones.

However, if the terminals described above are located in a vehicle, for example, placed inside the vehicle or mounted inside the vehicle, the terminals may be considered as vehicle-mounted terminals. For example, the vehicle-mounted terminals are also referred to as on-board units (on-board units, OBUs).

In embodiments of this application, an apparatus configured to implement a function of the terminal may be a terminal, or may be a circuit that can support the terminal in implementing the function, for example, a circuit that may be used in a chip system. The chip system may be mounted in the terminal. In embodiments of this application, the chip system may include a chip, or may include a chip and another discrete device. In the technical solutions provided in embodiments of this application, an example in which the apparatus configured to implement the function of the terminal is a terminal may be used to describe the technical solutions provided in embodiments of this application.

(2) Network device: may include a location management function (location management function, LMF) network element. The LMF network element is configured to implement functions such as positioning. The LMF network element is an apparatus or a component that is deployed in a core network and that provides a positioning function for the terminal device, and may be configured to determine a location of the terminal device. In this application, the LMF network element may be replaced with another apparatus or component that provides a positioning function for the terminal device, for example, a positioning server, a positioning management server, a location management function server, an LMF device, an LMF entity, an LMF network entity, or a network function. In a future positioning network, for example, a 6th generation (6th generation, 6G) mobile communication system, the LMF network element may still be an LMF network element or have another name. This is not limited in this application.

Optionally, the network device may further include another core network device, for example, an access and mobility management function (access and mobility management function, AMF), a user plane function (user plane function, UPF), or a session management function (session management function, SMF).

Optionally, the network device may alternatively be a device in a wireless network. For example, the network device may be a radio access network (radio access network, RAN) node (or device) that connects the terminal device to the wireless network, and may also be referred to as a base station. Currently, some examples of the RAN device are: a next-generation NodeB (generation NodeB, gNodeB) in a 5G communication system, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or the like. In addition, in a network structure, the network device may include a central unit (central unit, CU) node, a distributed unit (distributed unit, DU) node, or a RAN device including the CU node and the DU node.

The network device can send configuration information (for example, carried in a scheduling message and/or an indication message) to the terminal device, and the terminal device further performs network configuration based on the configuration information, so that network configurations of the network device and the terminal device are aligned. Alternatively, a network configuration preset in the network device and a network configuration preset in the terminal device are used, so that the network configurations of the network device and the terminal device are aligned. Specifically, "alignment" means that when there is an interaction message between the network device and the terminal device, the network device and the terminal device have a consistent understanding of a carrier frequency for sending and receiving the interaction message, determining of a type of the interaction message, a meaning of field information carried in the interaction message, or another configuration of the interaction message.

In addition, in another possible case, the network device may be another apparatus providing a wireless communication function for the terminal device. A specific technology and a specific device form that are used by the network device are not limited in embodiments of this application. For ease of description, this is not limited in embodiments of this application.

In embodiments of this application, an apparatus configured to implement a function of the network device may be the network device, or may be an apparatus, for example, a chip system, that can support the network device in implementing the function. The apparatus may be mounted in the network device. In the technical solutions provided in embodiments of this application, an example in which the apparatus configured to implement the function of the network device is a network device is used to describe the technical solutions provided in embodiments of this application.

(3) The terms "system" and "network" may be used interchangeably in embodiments of this application. "At least one" refers to one or more, and "a plurality of" refers to two or more. "And/or" describes an association relationship between associated objects, and indicates that three relationships may exist. For example, A and/or B may indicate the following three cases: A exists alone, both A and B exist, and B exists alone, where A and B may be singular or plural. The character "/" usually indicates an "or" relationship between the associated objects. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

This application may be applied to a long term evolution (long term evolution, LTE) system, a new radio (new radio, NR) system, or another communication system. The communication system includes a network device and a terminal device. The network device is used as a configuration information sending entity, and the terminal device is used as a configuration information receiving entity. Specifically, an entity in the communication system sends configuration information to another entity, and sends data to the another entity, or receives data sent by the another entity. The another entity receives the configuration information, and sends data to the configuration information sending entity based on the configuration information, or receives data sent by the configuration information sending entity. This application may be applied to a terminal device in a connected state or an active state (ACTIVE), or may be applied to a terminal device in a non-connected state (INACTIVE) or an idle state (IDLE).

In this application, unless otherwise specified, for same or similar parts in embodiments, refer to each other. In embodiments of this application and the implementations/methods/implementation methods in embodiments, unless otherwise specified or a logical conflict occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, or method, implementation method based on an internal logical relationship of the technical features. The following implementations of this application are not intended to limit the protection scope of this application.

For ease of understanding the method provided in embodiments of this application, the following describes a system architecture of the method provided in embodiments of this application. It may be understood that the system architecture described in embodiments of this application is intended to describe the technical solutions in embodiments of this application more clearly, and does not constitute any limitation on the technical solutions provided in embodiments of this application.

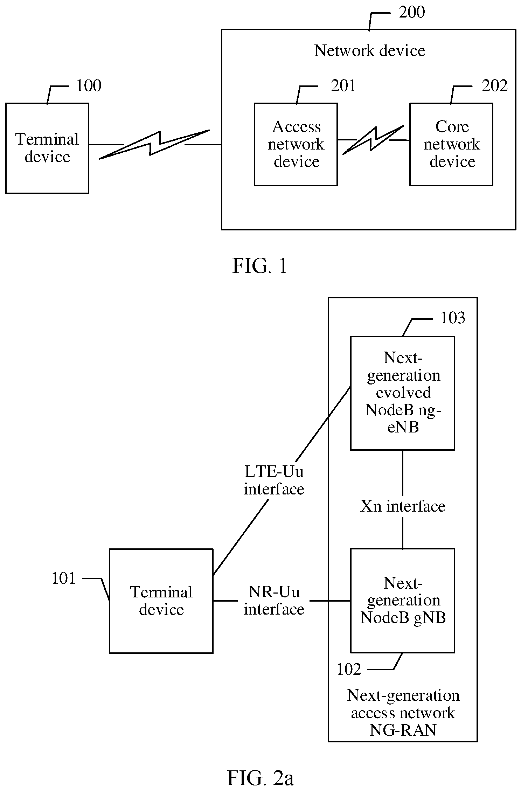

FIG. 1 is a diagram of a communication system according to an embodiment of this application. Refer to FIG. 1. The communication system includes a terminal device 100, an access network device 201, and a core network device 202. The terminal device 100 and the access network device 201 may communicate with each other over a radio link. The access network device 201 and the core network device 202 may communicate with each other.

In an implementation example, a communication system between the terminal device and the access network device may be implemented in a manner shown in FIG. 2a. Refer to FIG. 2a. The communication system includes the terminal device 101, and the access network device may include a next-generation NodeB (next Generation NodeB, gNB) 102, a next-generation evolved NodeB (next generation evolved NodeB, ng-eNB) 103, another access network device, or the like shown in the figure. The terminal device 101 communicates with the access network device (for example, the gNB 102 or the ng-eNB 103 in FIG. 1) through a Uu interface. The ng-eNB 103 is an access network device in a long term evolution (Long Term Evolution, LTE) communication system, and the gNB 102 is an access network device in an NR communication system.

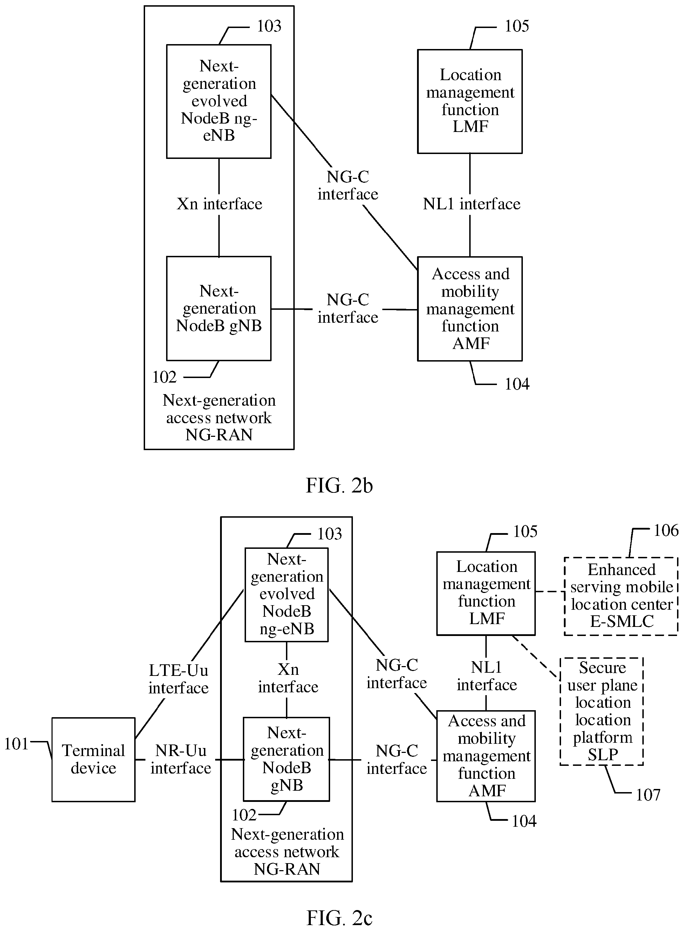

In an implementation example, a communication system between the access network device and the core network device may be implemented in a manner shown in FIG. 2b. Refer to FIG. 2b. The communication system includes an access network device and the core network device. For example, the access network device may include the gNB 102 and the ng-eNB 103 shown in the figure, and the core network device may include an access and mobility management function (access and mobility management function, AMF) 104 and a location management function (location management function, LMF) 105 shown in the figure. The LMF 105 is a network element, a module, or a component that provides a positioning function for a terminal device in an NR core network.

For example, in the communication system, access network devices may communicate with each other through an Xn interface, and the access network device may communicate with the AMF 104 through an NG-C interface. The AMF 104 may communicate with the LMF 105 through an NL1 interface, and the AMF 104 is equivalent to a router for communication between the access network device and the LMF 105. The LMF 105 is configured to perform positioning calculation on a location of the terminal device.

FIG. 2a merely shows an example in which the communication system includes two access network devices: the gNB and the ng-eNB. In actual application, the communication system may include at least one access network device. This is not specifically limited in this application.

In this application, in the communication system shown in FIG. 2b, the LMF is a name in the current communication system. In a future communication system, the name of the LMF may change with evolution of the communication system. In the current communication system or the future communication system, any function network element that has another name and a function similar to that of the LMF may be understood as the LMF in embodiments of this application, and is applicable to communication methods provided in embodiments of this application.

In the communication systems shown in FIG. 1, FIG. 2a, and FIG. 2b, based on an architecture with control of a location management function (Location management function, LMF) in a core network and assistance from the access network device and a terminal, the architecture may be used to implement a positioning process of the terminal device. Usually, an observed time difference of arrival (observed time difference of arrival, OTDOA) is mainly used in a downlink positioning method. A location of the terminal device is determined by using a time difference of arrival (time difference of arrival, TDOA) between time at which downlink reference signals of a plurality of cells arrive at the terminal device and time at which downlink signals of a base station serving a reference cell arrive at the terminal device that are obtained by the terminal device through measurement. For example, NR defines another downlink positioning technology, for example, a downlink positioning technology based on an angle of departure (angle of departure, AoD). In this technology, AoDs of base stations are inferred and calculated by using measurement information obtained by the terminal device by measuring downlink reference signals of the plurality of base stations, so that a location of the terminal device is determined based on the AoDs of the plurality of base stations.

For example, a communication system including the devices in FIG. 2a and FIG. 2b may alternatively be implemented in a manner shown in FIG. 2c.

Optionally, in FIG. 2c, the communication system further includes an enhanced serving mobile location center (evolved serving mobile location center, E-SMLC) 106 and a secure user plane location location platform (secure user plane location location platform, SLP) 107. The E-SMLC 106 is a network element, a module, or a component that provides a positioning function in a 4G core network. The SLP 107 is a network element, a module, or a component that is configured to process a user plane security positioning protocol in the 4G core network.

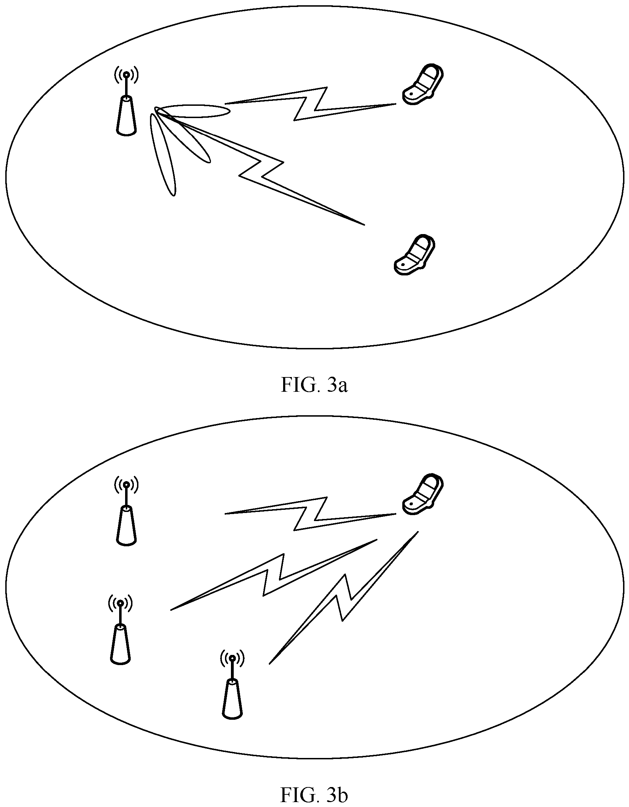

For example, the communication system to which this application is applied may further include one or more network devices and one or more terminal devices, as shown in FIG. 3a and FIG. 3b.

Optionally, as shown in FIG. 3a, one network device may transmit data or control signaling to the one or more terminal devices.

Optionally, as shown in FIG. 3b, the plurality of network devices may alternatively transmit data or control signaling to one terminal device simultaneously.

For example, an example in which the terminal device is UE is used. This current Rel-16 positioning has standardized an SRS used for positioning and Rel-15 SRS for multiple-input multiple-output (multiple-input multiple-output, MIMO), to support the following positioning technologies:
an uplink time difference of arrival (uplink time difference of arrival, U-TDOA) positioning technology, where uplink relative time of arrival (uplink relative time of arrival, UL RTOA) is measured in each cell on an SRS signal of the UE, and a measurement result is reported to the LMF;
an uplink angle-of-arrival (uplink angle-of-arrival, UL-AoA) positioning technology, where an UL-AoA is measured in each cell on an SRS signal of the UE, and a measurement result is reported to the LMF; and
a multi-cell round trip time (multi-cell round trip time, Multi-cell RTT) positioning technology, where the UE measures a receive-transmit time difference (Rx-Tx time difference) of the UE in each cell on a positioning reference signal (positioning reference signal, PRS), and reports a measurement result to the LMF; and a Rx-Tx time difference of a gNB is measured in each cell on an SRS signal of the UE, and a measurement result is reported to the LMF.

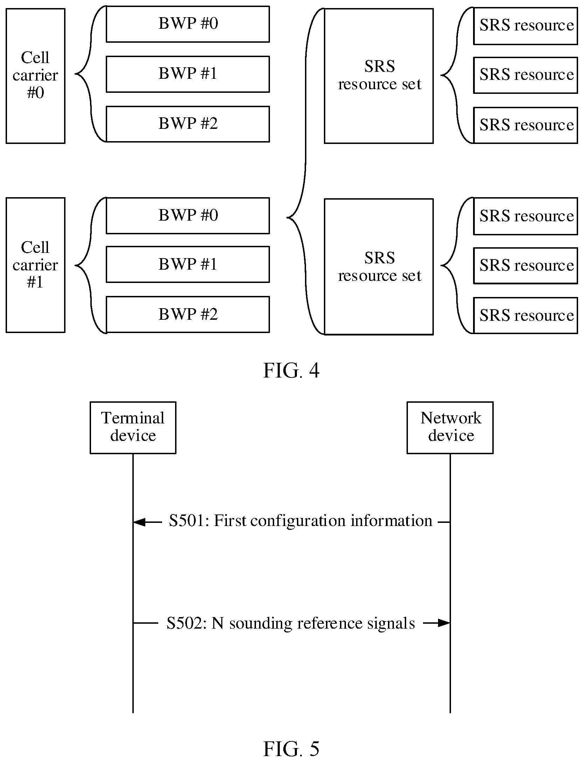

Usually, a configuration for the SRS includes the following levels, as shown in FIG. 4.
(1) Serving cell/carrier: Each serving cell (for example, a cell carrier #0 or a cell carrier #1 shown in FIG. 4) may include one uplink carrier or two uplink carriers. If there are two uplink carriers, one carrier is a normal uplink carrier, and the other carrier is a supplementary uplink (supplementary uplink, SUL) carrier. In addition, each uplink carrier includes one or more BWPs.
(2) Bandwidth part (bandwidth part, BWP): is a bandwidth part on a carrier (for example, as shown in FIG. 4, a BWP #0, a BWP #1, or a BWP #2 included in the cell carrier #0, or a BWP #0, a BWP #1, or a BWP #2 included in the cell carrier #1), and corresponds to a resource block (resource block, RB) set, a subcarrier spacing, and a cyclic prefix (cyclic prefix, CP) type. In Rel-15 and Rel-16, a plurality of BWPs may be configured on a cell carrier, but only at most one active BWP is configured at a moment. The terminal performs transmission of data, uplink control, and an SRS on the active BWP. One or more SRS resource sets may be configured on a BWP.
(3) SRS resource set: includes one or more SRS resources, and SRS resources in an SRS resource set have a same periodicity and SRS power control parameters.
   Optionally, different SRS resources in a same SRS resource set may correspond to different beams, or may correspond to different transmit antennas/antenna sets.
(4) SRS resource: is a minimum granularity of configuring the SRS, and an SRS resource corresponds to an SRS transmit beam.

Because a maximum bandwidth of a single carrier in an NR low frequency band (FR1) is 100 MHz, and a bandwidth of the SRS need to be configured based on the maximum bandwidth of the single carrier, a maximum bandwidth of an available signal for low-frequency positioning is 100 MHz. Compared with cellular positioning, ultra-wideband (Ultra-wideband, UWB) can support 500 MHz. Because positioning precision mostly depends on a signal bandwidth, performance of the cellular positioning is not competitive compared with that of the UWB.

In addition, because the reference signal used for positioning and another signal (for example, data or control signaling) that are sent by the terminal device are usually carried on the same carrier, the bandwidth of the carrier occupied by the reference signal used for the positioning decreases or even is preempted. Therefore, how to improve positioning precision is a technical problem that urgently needs to be resolved.

To resolve the foregoing problem, this application provides a communication method and a communication apparatus. The following further provides descriptions with reference to the accompanying drawings.

FIG. 5 is a diagram of a communication method according to an embodiment of this application. The method includes the following steps.

It needs to be noted that in FIG. 5, the method is illustrated by using an example in which a terminal device and a network device are used as execution bodies of the interaction illustration. However, the execution bodies of the interaction illustration are not limited in this application. For example, the terminal device in FIG. 5 may alternatively be a chip, a chip system, or a processor that supports the terminal device in implementing the method, or may be a logical module or software that can implement all or some functions of the terminal device. The network device in FIG. 5 may alternatively be a chip, a chip system, or a processor that supports the network device in implementing the method, or may be a logical module or software that can implement all or some functions of the network device.

S501: The network device sends first configuration information.

In this embodiment, the network device sends the first configuration information in step S501, and correspondingly, the terminal device receives the first configuration information in step 5501. The first configuration information is used to configure n sounding reference signals, where the sounding reference signals are used for positioning, a carrier corresponding to at least one of the n sounding reference signals is a positioning carrier, and n is an integer greater than 1.

It should be understood that, in this application, the first configuration information is used to configure the n sounding reference signals, which may alternatively be expressed as that the first configuration information is used to configure the n signals used for the positioning. A name of this signal used for the positioning in a current communication system may be a sounding reference signal (sounding reference signal, SRS). In a future communication system, a name of the SRS may change with evolution of the communication system.

It needs to be noted that before step S501, the network device may determine, in a plurality of manners, that the first configuration information needs to be delivered to the terminal device. For example, after receiving a positioning information request (POSITIONING INFORMATION REQUEST) message (where the message may include an SRS configuration and/or SRS bandwidth information) from a positioning server before step S501, the network device performs step S501 based on the message. For another example, when determining, before step S501, that positioning information of the terminal device needs to be obtained, the network device performs step S501.

In addition, on n carriers corresponding to the n sounding reference signals, a cell corresponding to the positioning carrier may be referred to as a secondary cell (secondary cell, SCell). If another carrier exists in the n carriers besides the positioning carrier, a cell corresponding to the another carrier may be an SCELL or a primary cell (primary cell, PCell).

For example, a value of n is 2 and the carriers corresponding to the n carriers are respectively a cell A and a cell B. The cell A is a positioning dedicated secondary cell (that is, a carrier corresponding to the cell A is a positioning carrier), and is not configured with a PDCCH/PDSCH or a PUSCH/PUCCH, but is configured with the SRS. The cell B may alternatively be a positioning dedicated secondary cell (that is, a carrier corresponding to the cell B is a positioning carrier), or is a normal cell having uplink or downlink data (that is, the carrier corresponding to the cell B is not the positioning carrier), namely, a cell configured with a PUCCH/PUSCH or a PDCCH/PDSCH. The cell may be a secondary cell SCell or a primary cell PCell. This is not limited herein.

In a possible implementation, the positioning carrier is not used to transmit a PDCCH signal, a PDSCH signal, a PUSCH signal, or a PUCCH signal.

In a possible implementation, the positioning carrier is only used to transmit the sounding reference signal; or the positioning carrier is only used to transmit the sounding reference signal and a physical random access channel (physical random access channel, PRACH) signal.

Based on the foregoing technical solution, the carrier corresponding to the at least one of the n sounding reference signals configured by using the first configuration information is the positioning carrier, and the positioning carrier is not used to transmit the PDCCH signal, the PDSCH signal, the PUSCH signal, or the PUCCH signal, that is, the positioning carrier does not need to adapt to receiving and sending of the PDCCH signal, the PDSCH signal, the PUSCH signal, and the PUCCH signal. Therefore, for the terminal device, on a radio frequency module, the terminal device only needs to support receiving and sending of a signal (where the signal includes the sounding reference signal, or the signal includes the sounding reference signal and the PRACH signal) on the positioning carrier, and on a baseband processing module, the terminal device may have a simple baseband signal processing capability instead of a capability of processing complex signals such as the PDCCH signal, the PDSCH signal, the PUSCH signal, and the PUCCH signal on the carrier, to simplify or save the baseband processing capability of the terminal device, and implement low-cost carrier aggregation (carrier aggregation, CA) positioning.

Similarly, for the network device, on a radio frequency module, the network device only needs to support receiving and sending of a signal (where the signal includes the sounding reference signal, or the signal includes the sounding reference signal and the PRACH signal) on the positioning carrier, and on a baseband processing module, the network device may have a simple baseband signal processing capability instead of a capability of processing complex signals such as the PDCCH signal, the PDSCH signal, the PUSCH signal, and the PUCCH signal on the carrier, to simplify or save the baseband processing capability of the network device, and implement low-cost CA positioning.

In an implementation example, to adapt to implementation of the positioning carrier, this application further provides a communication apparatus. The communication apparatus includes a radio frequency module and a baseband processing module. Carriers corresponding to signals that can be received and sent by the radio frequency module include carriers of (k+p) frequency domain resource units, where both k and p are integers greater than or equal to 1. The baseband processing module meets content as follows:

On a carrier of k frequency domain resource units, the baseband processing module supports processing of a target signal and processing of a first signal, where the first signal includes a PDCCH signal, a PDSCH signal, a PUSCH signal, and a PUCCH signal; and
on a carrier of p frequency domain resource units, the baseband processing module supports processing of the target signal, and the baseband processing module does not support processing of at least one of the PDCCH signal, the PDSCH signal, the PUSCH signal, and the PUCCH signal, where
the carriers corresponding to the n sounding reference signals are a subset of the carriers of the (k+p) frequency domain resource units.

Based on the foregoing technical solution, in the communication apparatus, the carriers corresponding to the signals that can be received and sent by the radio frequency module include the carriers of the (k+p) frequency domain resource units, but on the carrier of the p frequency domain resource units, the baseband processing module does not support the processing of the at least one of the PDCCH signal, the PDSCH signal, the PUSCH signal, and the PUCCH signal, that is, a capability of the radio frequency module of the communication apparatus is redundant. In other words, the communication apparatus supports a full communication capability on the carrier of the k frequency domain resource units, but the communication apparatus supports only simple receiving and sending of the target signal on the carrier of the p frequency domain resource units, that is, the communication apparatus may have a simple baseband signal processing capability on the carrier of the p frequency domain resource units, to simplify or save the baseband processing capability of the communication apparatus, and implement low-cost CA positioning.

Optionally, on the carrier of the p frequency domain resource units, the baseband processing module supports the processing of the target signal, and the baseband processing module does not support the processing of the PDCCH signal, the PDSCH signal, the PUSCH signal, and the PUCCH signal.

It should be understood that the communication apparatus may be a terminal device, or the apparatus may be a component (for example, a processor, a chip, or a chip system) in the terminal device, or the apparatus may be a logical module or software that can implement all or some functions of the terminal device; and/or the communication apparatus may alternatively be a network device, or the apparatus may alternatively be a component (for example, a processor, a chip, or a chip system) in the network device, or the apparatus may alternatively be a logical module or software that can implement all or some functions of the network device.

Optionally, the frequency domain resource unit may be a 10 megahertz (MHz), 50 MHz, 100 MHz, 500 MHz, or another frequency domain resource unit. This is not limited herein.

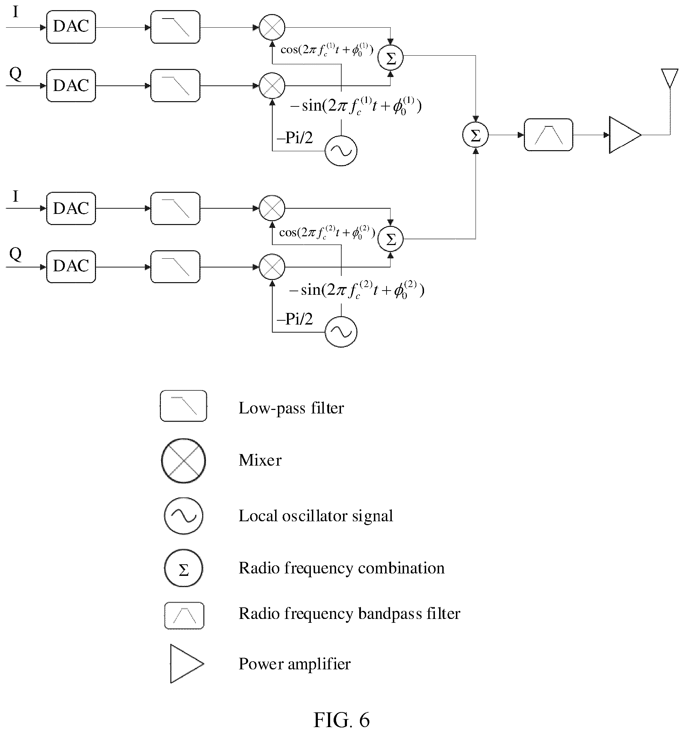

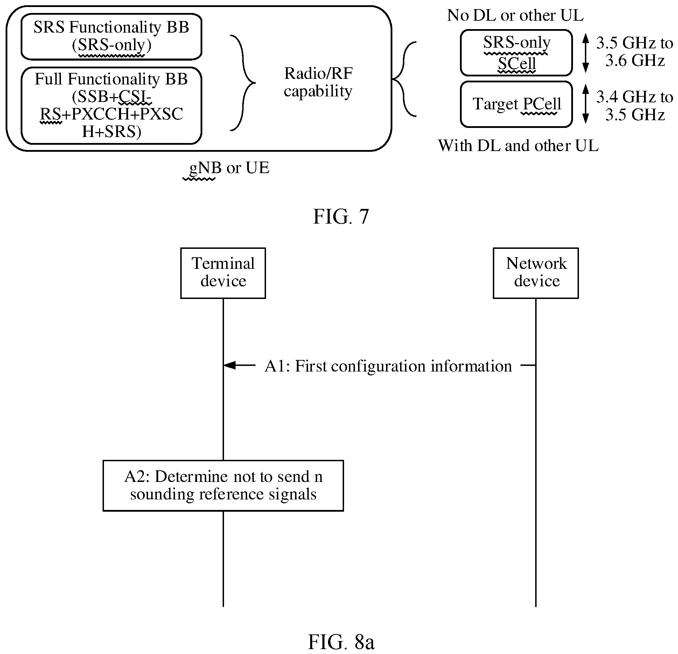

For example, the frequency domain resource unit being 100 MHz, values of k and p being both 1, and a n78 band (that is, the radio frequency module of the communication apparatus supports a spectrum of 3.3 GHz to 3.8 GHz in the n78 band) are used as an example herein for description with reference to examples in FIG. 6 and FIG. 7.

As shown in FIG. 6, in an implementation example of a terminal device, the following modules are included: a digital-to-analog converter (digital-to-analog converter, DAC), configured to perform digital-to-analog conversion; a low-pass filter, configured to: smooth signals output by the digital-to-analog converter, and suppress out-of-band leakage; a mixer, where the mixer may multiply baseband signals by a local oscillator signal, and is configured to up-convert the baseband signals to a radio frequency band; next, after processing of the local oscillator signal, a cosine branch and a sine branch may be output, to support modulation on I/Q branches; and then, radio frequency combination (Sigma) is performed, including intra-frequency combination of the I/Q channels and combination of two frequencies; and a radio frequency band-pass filter, which mainly eliminates a mirror frequency after mixing, which interferes a power amplifier configured to amplify a signal. In addition, an antenna such as a radio frequency feeder is further included.

As shown in FIG. 7, in an implementation example of a network device, the following modules are included: a sounding reference signal functionality baseband unit (SRS functionality BB) corresponding to a baseband unit configured to process only an SRS, and a full functionality baseband unit (full functionality BB) corresponding to a baseband unit configured to process all communication signals and channels. The SRS functionality BB is used to reduce costs of CA positioning supported by a base station and a terminal, and ensure large-bandwidth positioning precision. It should be understood that SRS functionality BB has lower costs and power consumption than the full functionality BB. In addition, the network device further has a radio/radio frequency capability (Radio/RF capability), indicating that the radio frequency capability of the network device and the terminal is a capability of sending the SRS functionality BB and the full functionality BB over a channel.

Optionally, a rightmost part of FIG. 7 is a concept under a corresponding standard framework. Actually, only an SRS-only SCell or a positioning carrier (or a positioning cell or another name) may be introduced in the standard, and a processing unit of an SRS on the positioning carrier (or the positioning cell or the another name) is completed by the SRS functionality BB.

For example, assuming that a bandwidth supported by a radio frequency device of the terminal device shown in FIG. 6 is 200 MHz, it means that a rate of the digital-to-analog converter (digital-to-analog converter, DAC) of the terminal device and a bandwidth of the radio frequency band-pass filter adapt to 200 MHz, but a baseband processing capability of the terminal device is sufficient to process only 100 MHz data. In this case, the terminal device can support a full communication capability with 100 MHz, including receiving or sending of an SSB, a CSI-RS, a PDCCH/PDSCH, a PUCCH/PUSCH, and an SRS. For example, the communication capability with 100 MHz may correspond to one carrier (3.4 GHz to 3.5 GHz) in a n78 band. In addition, a radio frequency of the terminal device has redundancy. Actually, a 200 MHz radio frequency signal can be sent, but a baseband of the terminal device cannot support receiving and sending of 200 MHz data. It means that if there is another carrier in a frequency ranging from 3.5 GHz to 3.6 GHz, the terminal cannot support data receiving and sending on the carrier. Therefore, the carrier becomes a positioning carrier. The terminal may have a simple baseband signal processing capability of sending an SRS or the like on the carrier, but the carrier cannot support processing of complex channels such as a PCCCH/PDSCH and a PUCCH/PUSCH. Because two CCs deployed in a same band are usually co-located, the terminal may use synchronization and timing of a cell at 3.4 GHz to 3.5 GHz for the positioning carrier.

It should be understood that this architecture may alternatively be implemented on a network device shown in FIG. 7. For example, the network device configures two 100 MHz carriers. One carrier supports a full communication capability, but the other carrier supports only simple SRS receiving. In this way, baseband processing complexity on the second carrier may be reduced. Because the two CCs deployed in a same band are usually co-located, the base station does not need to configure sending of a synchronization signal such as an SSB and receiving of a PRACH on the second carrier.

In a possible implementation, n carriers corresponding to the n sounding reference signals are located in a same band (band). Specifically, because different carriers located in the same band are usually in collocated deployment (collocated deployment) (or referred to as co-location), it may be considered that uplink and downlink timing of the different carriers located in the same band is synchronous, so that the n sounding reference signals sent by the terminal device can share same synchronization information, to reduce overheads.

Optionally, when n is greater than or equal to 3, at least two of the n carriers corresponding to the n sounding reference signals are located in the same band (band).

In a possible implementation, the n sounding reference signals share an antenna port or the n sounding reference signals have a phase difference.

Based on the foregoing technical solution, when the terminal device sends the n sounding reference signals, the n sounding reference signals share the antenna port or the n sounding reference signals have the phase difference, so that the receiving end of the n sounding reference signals can obtain a more accurate positioning measurement result in a carrier aggregation (carrier aggregation, CA) positioning manner by using a characteristic of bandwidth aggregation of the different carriers.

It should be understood that, in this application, that the n sounding reference signals share an antenna port means that channel states of the n sounding reference signals may be mutually inferred. In the protocol (TS 38.211), the antenna port is defined as follows: An antenna port is defined such that the channel over which a symbol on the antenna port is conveyed can be inferred from the channel over which another symbol on the same antenna port is conveyed (An antenna port is defined such that the channel over which a symbol on the antenna port is conveyed can be inferred from the channel over which another symbol on the same antenna port is conveyed).

It needs to be noted that, the foregoing manner may also be expressed as follows: A channel over which a symbol on which an antenna port is located is transferred (by using a reference signal or over a physical layer channel) may be inferred from a channel over which a symbol on which the same antenna port is located is transferred (by using a reference signal or over a physical layer channel). In other words, the channels over which the two symbols are transferred may be mutually inferred. In this case, the two symbols correspond to the same antenna port. That two reference signals correspond to the same antenna port means that the symbols to which the two reference signals are mapped correspond to the same antenna port.

Optionally, the two signals share the antenna port (correspond to the same antenna port), which is a strictest requirement for the two signals in the protocol. Usually, the two signals are sent through same precoding by using a same physical antenna or a same physical antenna set, and in this process, no radio frequency phase jump occurs, that is, the channels of the two signals are completely the same. In addition, the protocol allows a specific degree of relaxation on "the channels of the two signals are completely the same". For example, a channel phase change on different symbols caused by a Doppler shift when a terminal moves at a high speed or there is a small residual frequency offset from a transmit/receive radio frequency, which may also be considered as a same port. In this case, the receiving end needs to estimate the residual Doppler frequency based on assumption of the same port, and the channels may be considered as completely the same after elimination.

Optionally, that the n sounding signals have a phase difference refers to a relationship that is lower than a same port requirement. Currently, the protocol does not define this concept. An example in which a value of n is 2 is used. That two signals have a "phase difference" specifically means that, in addition to a specific fixed random phase difference between the two signals, channels may be mutually inferred. This case specifically corresponds to that the two signals are sent through same precoding by using a same physical antenna or a same physical antenna set, and in this process, a radio frequency phase jump may exist between the two signals, that is, the channels of the two signals are completely the same except random radio frequency phases. A main reason for the radio frequency phase jump is that the two signals use independent local oscillators for up-conversion or down-conversion, and the two independent local oscillators do not have a consistent or stable initial phase. This causes the phase difference between the two signals. Similar relaxation is also allowed when Doppler exists.

It should be noted that having the phase difference and Doppler are both visually phase changes, but are different from each other. Doppler is mainly used to describe a case that a phase of two signals on a same frequency (for example, a same CC/BWP) basically changes linearly with time. The phase difference is mainly used to describe a case that a phase of two signals on different frequencies (for example, different CCsBWPs) does not change linearly with the time.

In a possible implementation, before the terminal device receives the first configuration information in step S501, the method further includes: The terminal device sends first information, where the first information indicates capability information of the terminal device. Specifically, the terminal device may further send the first information indicating the capability information of the terminal device, so that after receiving the first information, the network device may determine a capability of the terminal device based on the first information, and use the first information as one of bases for determining the first configuration information.

Optionally, the first information includes at least one of the following:
first indication information, indicating a first maximum aggregated bandwidth, where the first maximum aggregated bandwidth is used to send m sounding reference signals, the m sounding reference signals are used for positioning, a carrier corresponding to at least one of the m sounding reference signals is a positioning carrier, the m sounding reference signals are configured to be carried in the same time domain resource unit, and m is an integer greater than 1;
second indication information, indicating a quantity of contiguous carriers corresponding to a first maximum aggregated bandwidth;
third indication information, indicating that the terminal device supports uplink carrier aggregation (uplink carrier aggregation, UL CA), and a carrier set corresponding to the UL CA includes at least one positioning carrier;
fourth indication information, indicating first switching time, where the first switching time is used for switching between sending a signal by the terminal device on a first carrier set and sending a sounding reference signal on a second carrier set, the first carrier set does not include a positioning carrier, and the second carrier set includes at least one positioning carrier;
fifth indication information, indicating that the terminal device does not send m sounding reference signals when a conflict occurs on a carrier corresponding to one or more of the m sounding reference signals in the same time domain resource unit; or
sixth indication information, indicating that the terminal device does not send one or more sounding reference signals when a conflict occurs on a carrier corresponding to the one or more of m sounding reference signals in the same time domain resource unit.

Based on the foregoing technical solution, the first information indicating the capability information of the terminal device may include the at least one of the foregoing, so that the network device determines, based on the first information, that the terminal device has the capability of sending the sounding reference signal on the positioning carrier, and delivers the first configuration information to the terminal device.

It needs to be noted that the first indication information, the second indication information, and the third indication information are intended to indicate that the terminal device supports the positioning carrier.

In an implementation example of the first indication information (or the second indication information), the first indication information (or the second indication information) may be carried in a Feature SetUplink (FeatureSetUplink) information element. For example, before step S501, the terminal device reports, by using the FeatureSetUplink information element, an aggregated SRS bandwidth in a band in which UL data is supported. FeatureSetUplink indicates a capability of supporting the uplink data by the terminal device per band in a CA band combination, or may be used to carry a capability of supporting an SRS resource by the terminal device.

It may be understood that, in this example, the bandwidth is greater than a bandwidth corresponding to ca-BandwidthClassUL-NR that corresponds to a target band in the CA band combination and that is reported by the terminal device. For example, the terminal device may report, in a n78 band in a band combination, that ca-BandwidthClassUL-NR is A, which corresponds to a single CC, and a maximum bandwidth is a maximum channel bandwidth in the band, and is for example, 100 MHz in the n78 band. However, an SRS bandwidth reported by the terminal device is 200 MHz.

In another implementation example of the first indication information (or the second indication information), the first indication information (or the second indication information) may be carried in a FeatureSetDownlink (FeatureSetDownlink) information element. For example, before step S501, the terminal device reports, by using the FeatureSetDownlink information element, an aggregated SRS bandwidth in a band in which UL data is not supported. Because the terminal device does not support the uplink data, the terminal does not report FeatureSetUplink in the band. However, the terminal device supports downlink data, and therefore may report the SRS bandwidth by using FeatureSetDownlink. FeatureSetDownlink indicates a capability of supporting the downlink data by the terminal device per band in a CA band combination. When being not reported, FeatureSetUplink may alternatively be used to carry a capability of supporting an SRS resource by the terminal.

It may be understood that, in this example, the bandwidth is greater than a bandwidth corresponding to ca-BandwidthClassUL-NR that corresponds to a target band in the CA band combination and that is reported by the terminal. For example, the terminal may report, in a n78 band in a band combination, that ca-BandwidthClassUL-NR is A, which corresponds to a single CC, and a maximum bandwidth is a maximum channel bandwidth in the band, and is for example, 100 MHz in the n78 band. However, an SRS bandwidth reported by the terminal is 200 MHz.

In another implementation example of the first indication information (or the second indication information), the first indication information (or the second indication information) may be carried in a BandCombination (BandCombination) information element or a BandParameters (BandParameters) information element in the band combination. In other words, the terminal reports an SRS-specific bandwidth class (BandwidthClass), and this reported information corresponds to one or more bands in a terminal CAband combination.

In addition, in another implementation example of the third indication information, the third indication information may be jointly indicated by using the BandwidthClass information element and the FeatureSetDownlink information element, or the third indication information may be indicated by using the FeatureSetUplink information element.

In addition, when the first information includes the fourth indication information, it indicates information about time at which the terminal device performs carrier switching on the positioning carrier. In other words, before step S501, the terminal device indicates the switching time at which the SRS is sent on the positioning carrier, and mainly indicates delay of radio frequency switching for terminal operation on a target band between a communication mode and a positioning mode. For example, the communication bandwidth of the terminal in the n78 band is 100 MHz, but a CA bandwidth of an SRS for positioning may support a maximum of 200 MHz. When the terminal is in a communication mode (that is, supports the receiving, sending, and processing of the signals such as the PDCCH signal, the PDSCH signal, the PUSCH signal, and the PUCCH signal), the radio frequency is at a center of 100 MHz, and the radio frequency filter is set based on 100 MHz; and when the terminal is in a positioning mode (that is, does not support the receiving, sending, and processing of the at least one of the PDCCH signal, the PDSCH signal, the PUSCH signal, and the PUCCH signal), the radio frequency is at a center of 200 MHz, and the radio frequency filter is set based on 200 MHz. It needs time for switching between the two modes, including re-tuning of the radio frequency center and a re-configuration of the filter. In this period of time, the terminal interrupts uplink communication or even downlink communication in the target band.

S502: The terminal device sends the n sounding reference signals.

In this embodiment, the terminal device sends the n sounding reference signals in step S502, and correspondingly, a network device receives the n sounding reference signals in step S502.

It needs to be noted that, in this application, the network device that sends the first configuration information to the terminal device in step S501 and the network device that receives the n sounding reference signals in step S502 may be a same network device or different network devices. This is not limited herein.

In a possible implementation, that the terminal device sends the n sounding reference signals based on the first configuration information in step S502 includes: When no conflict occurs on the carrier corresponding to the one or more of the n sounding reference signals in the same time domain resource unit, the terminal device sends the n sounding reference signals based on the first configuration information.

Specifically, after receiving the first configuration information in step S501, the terminal device may need to send the n sounding reference signals based on the first configuration information in step S502. In this process, when determining that no conflict occurs on the carrier corresponding to the one or more of the n sounding reference signals in the same time domain resource unit, the terminal device may send the n sounding reference signals based on the first configuration information. In other words, when determining that the n sounding reference signals do not conflict with other scheduled signals (from the terminal device or another terminal device) on corresponding time-frequency domain resources, the terminal device sends the n sounding reference signals based on the first configuration information, to avoid a transmission failure of the n sounding reference signals when avoiding impact on transmission of the other scheduled signals.

Based on the foregoing technical solution, in the first configuration information received by the terminal device in step S501, the first configuration information is used to configure the n sounding reference signals used for the positioning, and the carrier corresponding to the at least one of the n sounding reference signals is the positioning carrier. Therefore, the terminal device may subsequently send the at least one of the n sounding reference signals on the positioning carrier based on the first configuration information in step S502. In this way, in a manner in which the positioning carrier carries the at least one sounding reference signal, a case in which a carrier bandwidth decreases or even the carrier is preempted because the reference signal used for the positioning and another signal (for example, data or control signaling) are carried on the same carrier can be avoided, to improve positioning precision of the terminal device. In addition, a signal received by the receiving end of the n sounding reference signals is a signal obtained by performing carrier aggregation on the n sounding reference signals on n corresponding carriers. A characteristic of bandwidth aggregation of different carriers is used, so that the receiving end of the n sounding reference signals can obtain a more accurate positioning measurement result in a carrier aggregation (carrier aggregation, CA) positioning manner.

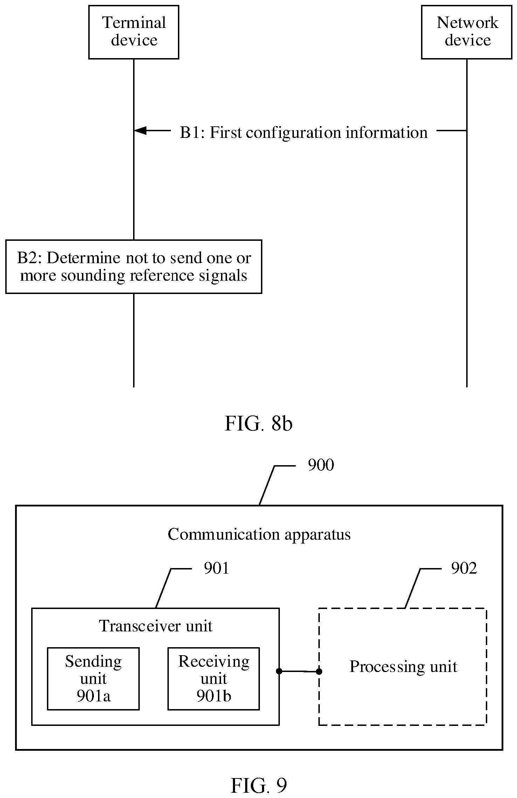

In a possible implementation of the method shown in FIG. 5, after receiving the first configuration information in step S501, the terminal device does not necessarily perform this process of sending the n sounding reference signals in step S502. When determining that the carrier corresponding to the one or more of the n sounding reference signals is used to transmit another signal in the same time domain resource unit, to avoid a conflict, the terminal device may determine not to send the n sounding reference signals or send only some of the n sounding reference signals. The following provides descriptions with reference to examples shown in FIG. 8a and FIG. 8b.

FIG. 8a is another diagram of a communication method according to this application. The method includes the following steps.

A1: A network device sends first configuration information.

In this embodiment, the network device sends the first configuration information in step A1, and correspondingly, a terminal device receives the first configuration information in step A1. The first configuration information is used to configure n sounding reference signals, where the sounding reference signals are used for positioning, a carrier corresponding to at least one of the n sounding reference signals is a positioning carrier, and n is an integer greater than 1.

It needs to be noted that, for an implementation process of step A1, refer to this implementation process of step S501, and achieve corresponding technical effects. Details are not described herein again.

A2: The terminal device determines not to send the n sounding reference signals.

Specifically, in step A2, when a conflict occurs on a carrier corresponding to one or more of the n sounding reference signals in a same time domain resource unit, the terminal device determines not to send the n sounding reference signals.

Based on the foregoing technical solution, after receiving the first configuration information in step A1, the terminal device may not need to send the n sounding reference signals. In this process, when determining that the conflict occurs on the carrier corresponding to the one or more of the n sounding reference signals in the same time domain resource unit, the terminal device may determine not to send the n sounding reference signals. In other words, when determining that the n sounding reference signals conflict with other scheduled signals (from the terminal device or another terminal device) on corresponding time-frequency domain resources, the terminal device sends the first signal instead of the n sounding reference signals, to avoid impact on transmission of the other scheduled signals.

It needs to be noted that, if the "same time domain resource unit" is a same slot, subframe, or frame, the same time domain resource unit may include a plurality of symbols. In this case, that the terminal device determines not to send the n sounding reference signals may also be expressed as: The terminal device determines not to send the n sounding reference signals on a symbol on which a conflict occurs in the same time domain resource unit. In other words, the terminal device may send the n sounding reference signals on symbols on which no conflict occurs in the same time domain resource unit.

For example, if the same time domain resource unit is four symbols in a slot, but a conflict occurs only on one symbol, that the terminal device determines not to send the n sounding reference signals may also be expressed as: The terminal device determines not to send the n sounding reference signals on the symbol. In other words, the terminal device may further send the n sounding reference signals on the other three symbols.

In a possible implementation, the first configuration information received by the terminal device in step A1 further includes seventh indication information, and the seventh indication information indicates that the terminal device does not send the n sounding reference signals when the conflict occurs on the carrier corresponding to the one or more of the n sounding reference signals in the same time domain resource unit.

It should be understood that, in this implementation, the seventh indication information may also be expressed as follows: The seventh indication information indicates that when the conflict occurs on the carrier corresponding to the one or more of the n sounding reference signals in the same time domain resource unit, the same time domain resource unit is not used to carry the n sounding reference signals.

Specifically, the first configuration information received by the terminal device may further include the seventh indication information, and the seventh indication information indicates that the terminal device does not send all of the n sounding reference signals when the conflict occurs on the carrier corresponding to the one or more of the n sounding reference signals in the same time domain resource unit. Therefore, after receiving the first configuration information, the terminal device determines, based on the seventh indication information, that the n sounding reference signals do not need to be sent when the n sounding reference signals conflict with other scheduled signals (from the terminal device or another terminal device) on corresponding time-frequency domain resources.

It needs to be noted that a process in which the terminal device performs step A2 may be triggered based on a capability of the terminal device. That is, before step A1, when the first information that is reported by the terminal device to the network device and that indicates capability information of the terminal device includes fifth indication information, the terminal device performs step A2. Alternatively, a process in which the terminal device performs step A2 may be triggered based on a configuration of the network device. That is, when the first configuration information further includes the seventh indication information, the terminal device performs step A2.

Optionally, in the technical solution shown in FIG. 8a, a reason why the terminal does not send the n sounding reference signals even if the conflict occurs on the carrier corresponding to the one or more sounding reference signals (instead of all n carriers corresponding to the n sounding reference signals) is that a complete effect that all the n sounding reference signals are sent is not achieved even if some of the n sounding reference signals are sent, that is, high-precision positioning obtained by using a CA aggregation bandwidth is not implemented. In addition, due to a limitation of a radio frequency device of the terminal, on a same symbol, uplink and downlink may not be necessarily performed on different CCs in a band simultaneously. In addition, if both a PUSCH on a CC and an SRS on another CC are included on the same symbol, a symbol-level power change may cause deterioration of SRS sending quality, and it is difficult to obtain good positioning measurement. In addition, because a base station that measures the SRS is not necessarily a base station serving the terminal, and cannot perceive partial transmission of SRSs from the terminal due to this conflict. If a base station of a neighboring cell receives the PUSCH/PUCCH and (n-1) SRSs as all the n SRSs, a poor measurement result is caused.

FIG. 8b is another diagram of a communication method according to this application. The method includes the following steps.

B 1: A network device sends first configuration information.

In this embodiment, the network device sends the first configuration information in step B1, and correspondingly, a terminal device receives the first configuration information in step B1. The first configuration information is used to configure n sounding reference signals, where the sounding reference signals are used for positioning, a carrier corresponding to at least one of the n sounding reference signals is a positioning carrier, and n is an integer greater than 1.

It needs to be noted that, for an implementation process of step B1, refer to this implementation process of step S501, and achieve corresponding technical effects. Details are not described herein again.

B2: The terminal device determines not to send one or more sounding reference signals.

Specifically, in step B2, when a conflict occurs on a carrier corresponding to the one or more of the n sounding reference signals in a same time domain resource unit, the terminal device determines not to send the one or more sounding reference signals.

Based on the foregoing technical solution, after receiving the first configuration information in step B 1, the terminal device may not need to send the n sounding reference signals. In this process, when determining that the conflict occurs on the carrier corresponding to the one or more of the n sounding reference signals, the terminal device may determine not to send some of the n sounding reference signals, that is, the terminal device may determine not to send the one or more sounding reference signals. In other words, when determining that the one or more of the n sounding reference signals conflict with other scheduled signals (from the terminal device or another terminal device) on corresponding time-frequency domain resources, the terminal device (stops signal receiving and sending or) sends the other scheduled signals instead of the n sounding reference signals on the time-frequency domain resource corresponding to the one or more sounding reference signals, to avoid impact on transmission of the first signal.

In a possible implementation, the first configuration information further includes eighth indication information, and the eighth indication information indicates that the terminal device does not send the one or more sounding reference signals when the conflict occurs on the carrier corresponding to the one or more of the n sounding reference signals in the same time domain resource unit.

It should be understood that, in this implementation, the eighth indication information may also be expressed as follows: The eighth indication information indicates that when the conflict occurs on the carrier corresponding to the one or more of the n sounding reference signals in the same time domain resource unit, the same time domain resource unit is not used to carry the one or more sounding reference signals.

Based on the foregoing technical solution, the first configuration information received by the terminal device may further include the eighth indication information, and the eighth indication information indicates that the terminal device does not send the one or more sounding reference signals when the conflict occurs on the carrier corresponding to the one or more of the n sounding reference signals in the same time domain resource unit. Therefore, after receiving the first configuration information, the terminal device determines, based on the eighth indication information, that the one or more sounding reference signals do not need to be sent when the one or more sounding reference signals conflict with other scheduled signals (from the terminal device or another terminal device) on corresponding time-frequency domain resources.

It needs to be noted that a process in which the terminal device performs step B2 may be triggered based on a capability of the terminal device. That is, before step B 1, when the first information that is reported by the terminal device to the network device and that indicates capability information of the terminal device includes sixth indication information, the terminal device performs step B2. Alternatively, a process in which the terminal device performs step B2 may be triggered based on a configuration of the network device. That is, when the first configuration information further includes the eighth indication information, the terminal device performs step B2.

In a possible implementation, before step A2 (or step B2), the method further includes: The terminal device receives second information, where the second information includes at least one of the following:
ninth indication information, where the ninth indication information indicates that at least one symbol corresponding to the same time domain resource unit is a flexible symbol; or
tenth indication information, where the tenth indication information indicates that at least one symbol corresponding to the same time domain resource unit is preempted.

The terminal device determines, based on the second information, that the conflict occurs on the carrier corresponding to the one or more of the n sounding reference signals in the same time domain resource unit.

Specifically, the terminal device may further receive the second information including the at least one piece of information, so that the terminal device determines, based on the at least one piece of information, that the conflict occurs on the carrier corresponding to the one or more of the n sounding reference signals in the same time domain resource unit, and determines whether to send the n sounding reference signals (or determines whether to send the one or more sounding reference signals).

In a possible implementation, before step A2 (or step B2), the method further includes: The terminal device receives eleventh indication information, where the eleventh indication information indicates to transmit a first signal on the carrier corresponding to the one or more of the n sounding reference signals, and the first signal includes at least one of a physical downlink control channel PDCCH signal, a physical downlink shared channel PDSCH signal, a physical uplink shared channel PUSCH signal, and a physical uplink control channel PUCCH. The terminal device determines a first symbol set, where the first symbol set is a symbol occupied by the first signal or the first symbol set is a union set of the symbol occupied by the first signal and a switching symbol, the switching symbol is located before the symbol occupied by the first signal or after the symbol occupied by the first signal, and a quantity of switching symbols is determined by the first switching time. When the first symbol set includes at least one symbol corresponding to the same time domain resource unit, the terminal device determines that the conflict occurs on the carrier corresponding to the one or more of the n sounding reference signals in the same time domain resource unit.

It needs to be noted that the first switching time is used for switching between sending a signal by the terminal device on a first carrier set and sending a sounding reference signal on a second carrier set, the first carrier set does not include the positioning carrier, and the second carrier set includes the at least one positioning carrier.

Specifically, the terminal device may further receive the eleventh indication information indicating to transmit the first signal on the carrier corresponding to the one or more of the n sounding reference signals, and further determines the first symbol set based on the eleventh indication information. The first symbol set is the symbol occupied by the first signal or the first symbol set is the union set of the symbol occupied by the first signal and the switching symbol. In addition, when the first symbol set includes the at least one symbol corresponding to the same time domain resource unit, to avoid impact on transmission of the first signal, the terminal device determines that the conflict occurs on the carrier corresponding to the one or more of the n sounding reference signals in the same time domain resource unit, and determines whether to send the n sounding reference signals (or determines whether to send the one or more sounding reference signals).

It should be understood that the eleventh indication information may be semi-static configuration information (for example, a radio resource control (radio resource control, RRC) configuration), or may be dynamic scheduling information (for example, downlink control information (downlink control information, DCI) scheduling). This is not limited herein.

Optionally, in the technical solution shown in FIG. 8b, the terminal keeps sending of SRSs that do not conflict, so that it can be ensured that a network makes full use of the sent SRSs to position the terminal on a premise that there is conflict information. In this case, although positioning precision is not as high as that of sending of all the n SRSs, precision corresponding to the sent SRSs can still be obtained. From a perspective of a radio frequency of the terminal, the terminal also needs to have a strong radio frequency capability, to ensure that sending quality of the SRSs that do not conflict is not affected.

The foregoing describes this application from a perspective of the methods, and the following describes apparatuses in this application.

FIG. 9 is an implementation diagram of a communication apparatus according to an embodiment of this application. The communication apparatus may perform this implementation process related to the terminal device or the network device in any one of the foregoing embodiments.

As shown in FIG. 9, the communication apparatus 900 may include at least a transceiver unit 901. Further, optionally, the communication apparatus 900 may further include a processing unit 902.

Optionally, the transceiver unit 901 may also be referred to as a transceiver module, a transceiver assembly, a transceiver, a signal transceiver, or the like.

Optionally, the processing unit 902 may also be referred to as a processing module, a processor, a signal processor, a processing apparatus, or the like.

Optionally, the transceiver unit 901 may alternatively include a sending unit 901a (or referred to as a sending module, a transmit module, a transmitter, a signal transmitter, or the like) and a transceiver unit 901b (or referred to as a receiving module, a receiving assembly, a receiver, a signal receiver, or the like). The sending unit and the receiving unit may be implemented through integration in a same physical/virtual modular manner, or may be separately implemented in an independently disposed physical/virtual modular manner. This is not limited herein.

Optionally, when the communication apparatus 900 is a chip, the transceiver unit 901 may alternatively be an input/output interface.

In an implementation, the communication apparatus 900 is configured to perform the communication method related to the foregoing terminal device. The communication apparatus 900 includes at least a sending unit 901a and a receiving unit 901b.

The receiving unit 901b is configured to receive first configuration information, where the first configuration information is used to configure n sounding reference signals, the sounding reference signals are used for positioning, a carrier corresponding to at least one of the n sounding reference signals is a positioning carrier, and n is an integer greater than 1.

The sending unit 901a is configured to send the n sounding reference signals based on the first configuration information, where the n sounding reference signals are carried in a same time domain resource unit.

In a possible implementation, the sending unit 901a is further configured to send first information, where the first information indicates capability information of the terminal device.

In a possible implementation, the first information includes at least one of the following:
first indication information, indicating a first maximum aggregated bandwidth, where the first maximum aggregated bandwidth is used to send m sounding reference signals, the m sounding reference signals are used for positioning, a carrier corresponding to at least one of the m sounding reference signals is a positioning carrier, the m sounding reference signals are configured to be carried in the same time domain resource unit, and m is an integer greater than 1;
second indication information, indicating a quantity of contiguous carriers corresponding to a first maximum aggregated bandwidth;
third indication information, indicating that the terminal device supports uplink carrier aggregation (uplink carrier aggregation, UL CA), and a carrier set corresponding to the UL CA includes at least one positioning carrier;
fourth indication information, indicating first switching time, where the first switching time is used for switching between sending a signal by the terminal device on a first carrier set and sending a sounding reference signal on a second carrier set, the first carrier set does not include a positioning carrier, and the second carrier set includes at least one positioning carrier;
fifth indication information, indicating that the terminal device does not send m sounding reference signals when a conflict occurs on a carrier corresponding to one or more of the m sounding reference signals in the same time domain resource unit; or
sixth indication information, indicating that the terminal device does not send one or more sounding reference signals when a conflict occurs on a carrier corresponding to the one or more of m sounding reference signals in the same time domain resource unit.

In a possible implementation, the apparatus further includes a processing unit 902.

When the processing unit 902 determines that no conflict occurs on a carrier corresponding to one or more of the n sounding reference signals in the same time domain resource unit, the sending unit 901a is specifically configured to send the n sounding reference signals based on the first configuration information, where a first signal includes at least one of a PDCCH signal, a PDSCH signal, a PUSCH signal, and a PUCCH.

In a possible implementation, when determining that a conflict occurs on the carrier corresponding to the one or more of the n sounding reference signals in the same time domain resource unit, the processing unit 902 is configured to determine not to send the n sounding reference signals.

In a possible implementation, the first configuration information further includes seventh indication information, and the seventh indication information indicates that the terminal device does not send the n sounding reference signals when a conflict occurs on a carrier corresponding to any one of the n sounding reference signals in the same time domain resource unit.

In a possible implementation, when determining that a conflict occurs on the carrier corresponding to the one or more of the n sounding reference signals in the same time domain resource unit, the processing unit 902 is further configured to determine not to send the one or more sounding reference signals.

In a possible implementation, the first configuration information further includes eighth indication information, and the eighth indication information indicates that the terminal device does not send the one or more sounding reference signals when the conflict occurs on the carrier corresponding to the one or more of the n sounding reference signals in the same time domain resource unit.

In a possible implementation, the receiving unit 901b is further configured to receive second information, where the second information includes at least one of the following:
ninth indication information, where the ninth indication information indicates that at least one symbol corresponding to the same time domain resource unit is a flexible symbol; or
tenth indication information, where the tenth indication information indicates that at least one symbol corresponding to the same time domain resource unit is preempted.

The processing unit 902 is further configured to determine, based on the second information, that the conflict occurs on the carrier corresponding to the one or more of the n sounding reference signals in the same time domain resource unit.

In a possible implementation, the receiving unit is further configured to receive eleventh indication information, where the eleventh indication information indicates to transmit the first signal on the carrier corresponding to the one or more of the n sounding reference signals, and the first signal includes the at least one of the physical downlink control channel PDCCH signal, the physical downlink shared channel PDSCH signal, the physical uplink shared channel PUSCH signal, and the physical uplink control channel PUCCH.

The processing unit is further configured to determine a first symbol set, where the first symbol set is a symbol occupied by the first signal or the first symbol set is a union set of the symbol occupied by the first signal and a switching symbol, the switching symbol is located before the symbol occupied by the first signal or after the symbol occupied by the first signal, and a quantity of switching symbols is determined by the first switching time.

When determining that the first symbol set includes at least one symbol corresponding to the same time domain resource unit, the processing unit determines that the conflict occurs on the carrier corresponding to the one or more of the n sounding reference signals in the same time domain resource unit.

In a possible implementation, the positioning carrier is not used to transmit the PDCCH signal, the PDSCH signal, the PUSCH signal, or the PUCCH signal.

In a possible implementation, the positioning carrier is only used to transmit the sounding reference signal; or
the positioning carrier is only used to transmit the sounding reference signal and a physical random access channel PRACH signal.

In a possible implementation, n carriers corresponding to the n sounding reference signals are located in a same band.

In a possible implementation, the n sounding reference signals share an antenna port or the n sounding reference signals have a phase difference.

In an implementation, the communication apparatus 900 is configured to perform the communication method related to the foregoing network device. The communication apparatus 900 includes a transceiver unit 901 and a processing unit 902.

The processing unit 902 is configured to determine first configuration information, where the first configuration information is used to configure n sounding reference signals, the sounding reference signals are used for positioning, the n sounding reference signals are carried in a same time domain resource unit, a carrier corresponding to at least one of the n sounding reference signals is a positioning carrier, and n is an integer greater than 1.

The transceiver unit 901 is configured to send the first configuration information.

In a possible implementation, the transceiver unit 901 is further configured to receive first information, where the first information indicates capability information of a terminal device.

The processing unit 902 is further configured to determine the first configuration information based on the first information.

In a possible implementation, the first information includes at least one of the following:
first indication information, indicating a first maximum aggregated bandwidth, where the first maximum aggregated bandwidth is used to send m sounding reference signals, the m sounding reference signals are used for positioning, a carrier corresponding to at least one of the m sounding reference signals is a positioning carrier, the m sounding reference signals are configured to be carried in the same time domain resource unit, and m is an integer greater than 1;
second indication information, indicating a quantity of contiguous carriers corresponding to a first maximum aggregated bandwidth;
third indication information, indicating that the terminal device supports uplink carrier aggregation (uplink carrier aggregation, UL CA), and a carrier set corresponding to the UL CA includes at least one positioning carrier;
fourth indication information, indicating first switching time, where the first switching time is used for switching between sending a signal by the terminal device on a first carrier set and sending a sounding reference signal on a second carrier set, the first carrier set does not include a positioning carrier, and the second carrier set includes at least one positioning carrier;
fifth indication information, indicating that the terminal device does not send m sounding reference signals when a conflict occurs on a carrier corresponding to one or more of the m sounding reference signals in the same time domain resource unit; or
sixth indication information, indicating that the terminal device does not send one or more sounding reference signals when a conflict occurs on a carrier corresponding to the one or more of m sounding reference signals in the same time domain resource unit.

In a possible implementation, the first configuration information further includes seventh indication information, and the seventh indication information indicates that the terminal device does not send the n sounding reference signals when a conflict occurs on a carrier corresponding to one or more of the n sounding reference signals in the same time domain resource unit.

In a possible implementation, the first configuration information further includes eighth indication information, and the eighth indication information indicates that the terminal device does not send the one or more sounding reference signals when the conflict occurs on the carrier corresponding to the one or more of the n sounding reference signals in the same time domain resource unit.

In a possible implementation, the transceiver unit 901 is further configured to send second information, where the second information includes at least one of the following:
ninth indication information, where the ninth indication information indicates that at least one symbol corresponding to the same time domain resource unit is a flexible symbol;
tenth indication information, where the tenth indication information indicates that at least one symbol corresponding to the same time domain resource unit is preempted; or
eleventh indication information, where the eleventh indication information indicates to transmit a first signal on the carrier corresponding to the one or more of the n sounding reference signals, and the first signal includes at least one of a physical downlink control channel PDCCH signal, a physical downlink shared channel PDSCH signal, a physical uplink shared channel PUSCH signal, and a physical uplink control channel PUCCH.

In a possible implementation, the positioning carrier is not used to transmit the PDCCH signal, the PDSCH signal, the PUSCH signal, or the PUCCH signal.

In a possible implementation, the positioning carrier is only used to transmit the sounding reference signal; or
the positioning carrier is only used to transmit the sounding reference signal and a physical random access channel PRACH signal.

In a possible implementation, n carriers corresponding to the n sounding reference signals are located in a same band.

In a possible implementation of the fourth aspect, the n sounding reference signals share an antenna port or the n sounding reference signals have a phase difference.

It needs to be noted that for content such as an information execution process of the units of the communication apparatus 900, specifically refer to descriptions in the foregoing method embodiments of this application. Details are not described herein again.

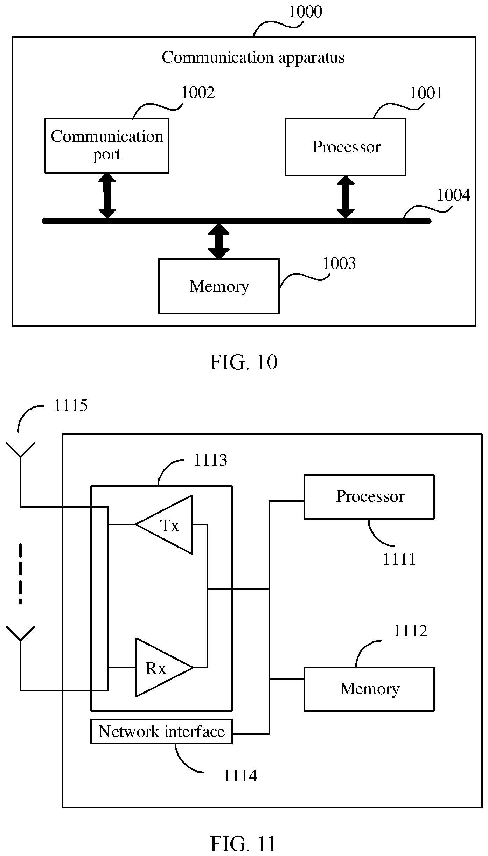

FIG. 10 shows the communication apparatus in the foregoing embodiment according to an embodiment of this application. The communication apparatus 1000 may be the terminal device shown in any one of the foregoing embodiments, or the communication apparatus 1000 may be some components (for example, a processor, a chip, or a chip system) in the terminal device shown in any one of the foregoing embodiments.

FIG. 10 is a diagram of a possible logical structure of the communication apparatus 1000. The communication apparatus 1000 may include but is not limited to at least one processor 1001 and a communication port 1002. Further, optionally, the apparatus may further include a memory 1003 and a bus 1004. In this embodiment of this application, the at least one processor 1001 is configured to control an action performed by the communication apparatus 1000.

In addition, the processor 1001 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments. Details are not described herein again.

It needs to be noted that the communication apparatus 1000 shown in FIG. 10 may be configured to implement other steps implemented by the terminal device in the foregoing corresponding method embodiments, and achieves technical effects corresponding to the terminal device. For a specific implementation of the communication apparatus 1000 shown in FIG. 10, refer to descriptions in the foregoing method embodiments. Details are not described herein again.

FIG. 11 is a structural diagram of the network device or some components (for example, the processor, the chip, or the chip system) of the network device in the foregoing embodiments according to an embodiment of this application. In the following, an example in which the example structural diagram shown in FIG. 11 is a structural diagram of a network device is used for description.

For example, the network device may include an access network device or a core network device.

For example, the network device in the structural diagram shown in FIG. 11 may be used to perform the method described in any one of the embodiments shown in FIG. 4 to FIG. 11. FIG. 4 is used as an example. The network device may send first priority information in step S401, and the network device may further receive a measurement result in step S403.

As shown in FIG. 11, the network device includes at least one processor 1111. Optionally, the network device may further include a network interface 1114.

Further, optionally, the network device further includes a memory 1112, a transceiver 1113, and one or more antennas 1115. The processor 1111, the memory 1112, the transceiver 1113, and the network interface 1114 are connected, for example, connected through a bus. In this embodiment of this application, connections may include various interfaces, transmission lines, buses, or the like. This is not limited in this embodiment. The antennas 1115 are connected to the transceiver 1113. The network interface 1114 is configured to connect the network device to another communication device over a communication link. For example, the network interface 1114 may include a network interface between the network device and the core network device, for example, an S 1 interface. The network interface may include a network interface between the network device and another network device (for example, the another network device or the core network device), for example, an X2 or Xn interface.

The processor 1111 is mainly configured to: process a communication protocol and communication data, control the entire network device, execute a software program, and process data of the software program, for example, is configured to support the network device in performing an action described in embodiments. The network device may include a baseband processor and a central processing unit. The baseband processor is mainly configured to process the communication protocol and the communication data. The central processing unit is mainly configured to control an entire terminal device, execute the software program, and process the data of the software program. Functions of the baseband processor and the central processing unit may be integrated into the processor 1111 in FIG. 11. A person skilled in the art may understand that the baseband processor and the central processing unit each may be an independent processor, and are interconnected by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 1112 may exist independently, and is connected to the processor 1111. Optionally, the memory 1112 may be integrated with the processor 1111, for example, integrated into a chip. The memory 1112 can store program code for executing the technical solutions in embodiments of this application, and the processor 1111 controls the execution. Various types of executed computer program code may also be considered as a driver of the processor 1111.

FIG. 11 merely shows one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 1113 may be configured to support receiving or sending of a radio frequency signal between a network device and a terminal, and the transceiver 1113 may be connected to the antenna 1115. The transceiver 1113 includes a transmitter Tx and a receiver Rx. Specifically, the one or more antennas 1115 may receive a radio frequency signal. The receiver Rx of the transceiver 1113 is configured to: receive the radio frequency signal from the antenna, convert the radio frequency signal into a digital baseband signal or a digital intermediate frequency signal, and provide the digital baseband signal or the digital intermediate frequency signal to the processor 1111, so that the processor 1111 performs further processing, for example, demodulation processing and decoding processing, on the digital baseband signal or the digital intermediate frequency signal. In addition, the transmitter Tx of the transceiver 1113 is further configured to: receive a modulated digital baseband signal or digital intermediate frequency signal from the processor 1111, convert the modulated digital baseband signal or digital intermediate frequency signal into a radio frequency signal, and send the radio frequency signal through the one or more antennas 1115. Specifically, the receiver Rx may selectively perform one-level or multi-level down-conversion mixing and analog-to-digital conversion on the radio frequency signal, to obtain the digital baseband signal or the digital intermediate frequency signal. A sequence of the down-conversion mixing and the analog-to-digital conversion is adjustable. The transmitter Tx may selectively perform one-level or multi-level up frequency mixing processing and digital-to-analog conversion on the modulated digital baseband signal or digital intermediate frequency signal, to obtain the radio frequency signal. A sequence of the up frequency mixing processing and the digital-to-analog conversion is adjustable. The digital baseband signal and the digital medium-frequency signal may be collectively referred to as a digital signal.

The transceiver may also be referred to as a transceiver unit, a transceiver machine, a transceiver apparatus, or the like. Optionally, a device configured to implement a receiving function in the transceiver unit may be considered as a receiving unit, and a device configured to implement a sending function in the transceiver unit may be considered as a sending unit. In other words, the transceiver unit includes a receiving unit and a sending unit. The receiving unit may also be referred to as a receiver, an input port, a receiving circuit, or the like. The sending unit may be referred to as a transmitter machine, a transmitter, a transmission circuit, or the like.

It needs to be noted that the network device shown in FIG. 11 may be configured to implement the steps implemented by the network device in the foregoing method embodiments, and achieves technical effects corresponding to the network device. For a specific implementation of the network device shown in FIG. 11, refer to descriptions in the foregoing method embodiments. Details are not described herein again.

An embodiment of this application further provides a computer-readable storage medium storing one or more computer-executable instructions. When the computer-executable instructions are executed by a processor, the processor performs the method in the possible implementations of the terminal device in the foregoing embodiments.

An embodiment of this application further provides a computer-readable storage medium storing one or more computer-executable instructions. When the computer-executable instructions are executed by a processor, the processor performs the method in the possible implementations of the network device in the foregoing embodiments.

An embodiment of this application further provides a computer program product (or referred to as a computer program) storing one or more computers. When the computer program product is executed by a processor, the processor performs the method in the possible implementations of the foregoing terminal device.

An embodiment of this application further provides a computer program product storing one or more computers. When the computer program product is executed by a processor, the processor performs the method in the possible implementations of the foregoing network device.

An embodiment of this application further provides a chip system. The chip system includes at least one processor, configured to support a terminal device in implementing functions in the foregoing possible implementations of the terminal device. Optionally, the chip system further includes an interface circuit, and the interface circuit provides program instructions and/or data for the at least one processor. In a possible design, the chip system may further include a memory. The memory is configured to store program instructions and data that are necessary for the terminal device. The chip system may include a chip, or may include a chip and another discrete device.

An embodiment of this application further provides a chip system. The chip system includes at least one processor, configured to support a network device in implementing functions in the foregoing possible implementations of the network device. Optionally, the chip system further includes an interface circuit, and the interface circuit provides program instructions and/or data for the at least one processor. In a possible design, the chip system may further include a memory. The memory is configured to store program instructions and data that are necessary for the network device. The chip system may include a chip, or may include a chip and another discrete device. The network device may be the network device in the foregoing method embodiments.

An embodiment of this application further provides a communication system. An architecture of the network system includes the terminal device and the network device in any one of the foregoing embodiments.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. Some or all of the units may be selected based on actual requirements to achieve the objectives of the solutions of the embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit. When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of embodiments of this application. However, the protection scope of embodiments of this application is not limited thereto. Any change or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A communication method, comprising:
receiving, by a terminal device, first configuration information, wherein the first configuration information is used to configure n sounding reference signals, the sounding reference signals are used for positioning, a carrier corresponding to at least one of the n sounding reference signals is a positioning carrier, and n is an integer greater than 1; and
sending, by the terminal device, the n sounding reference signals based on the first configuration information, wherein the n sounding reference signals are carried in a same time domain resource unit.

2. The method according to claim 1, wherein before the receiving, by a terminal device, first configuration information, the method further comprises:
sending, by the terminal device, first information, wherein the first information indicates capability information of the terminal device.

3. The method according to claim 2, wherein the first information comprises at least one of the following:
first indication information, indicating a first maximum aggregated bandwidth, wherein the first maximum aggregated bandwidth is used to send m sounding reference signals, the m sounding reference signals are used for positioning, a carrier corresponding to at least one of the m sounding reference signals is a positioning carrier, the m sounding reference signals are configured to be carried in the same time domain resource unit, and m is an integer greater than 1;
second indication information, indicating a quantity of contiguous carriers corresponding to a first maximum aggregated bandwidth;
third indication information, indicating that the terminal device supports uplink carrier aggregation UL CA, and a carrier set corresponding to the UL CA comprises at least one positioning carrier;
fourth indication information, indicating first switching time, wherein the first switching time is used for switching between sending a signal by the terminal device on a first carrier set and sending a sounding reference signal on a second carrier set, the first carrier set does not comprise a positioning carrier, and the second carrier set comprises at least one positioning carrier;
fifth indication information, indicating that the terminal device does not send m sounding reference signals when a conflict occurs on a carrier corresponding to one or more of the m sounding reference signals in the same time domain resource unit; or
sixth indication information, indicating that the terminal device does not send one or more sounding reference signals when a conflict occurs on a carrier corresponding to the one or more of m sounding reference signals in the same time domain resource unit.

4. The method according to any one of claims 1 to 3, wherein the sending, by the terminal device, the n sounding reference signals based on the first configuration information comprises:
when determining that no conflict occurs on a carrier corresponding to one or more of the n sounding reference signals in the same time domain resource unit, sending, by the terminal device, the n sounding reference signals based on the first configuration information.

5. The method according to claim 4, wherein the method further comprises:
when determining that a conflict occurs on the carrier corresponding to the one or more of the n sounding reference signals in the same time domain resource unit, determining, by the terminal device, not to send the n sounding reference signals.

6. The method according to claim 4 or 5, wherein the first configuration information further comprises seventh indication information, and the seventh indication information indicates that the terminal device does not send the n sounding reference signals when the conflict occurs on the carrier corresponding to the one or more of the n sounding reference signals in the same time domain resource unit.

7. The method according to claim 4, wherein the method further comprises:
when determining that a conflict occurs on the carrier corresponding to the one or more of the n sounding reference signals in the same time domain resource unit, determining, by the terminal device, not to send the one or more sounding reference signals.

8. The method according to claim 4 or 7, wherein the first configuration information further comprises eighth indication information, and the eighth indication information indicates that the terminal device does not send the one or more sounding reference signals when the conflict occurs on the carrier corresponding to the one or more of the n sounding reference signals in the same time domain resource unit.

9. The method according to any one of claims 5 to 8, wherein the method further comprises:
receiving, by the terminal device, second information, wherein the second information comprises at least one of the following:
ninth indication information, wherein the ninth indication information indicates that at least one symbol corresponding to the same time domain resource unit is a flexible symbol; or
tenth indication information, wherein the tenth indication information indicates that at least one symbol corresponding to the same time domain resource unit is preempted; and
determining, by the terminal device based on the second information, that the conflict occurs on the carrier corresponding to the one or more of the n sounding reference signals in the same time domain resource unit.

10. The method according to any one of claims 5 to 8, wherein the method further comprises:
receiving, by the terminal device, eleventh indication information, wherein the eleventh indication information indicates to transmit a first signal on the carrier corresponding to the one or more of the n sounding reference signals, and the first signal comprises at least one of a physical downlink control channel PDCCH signal, a physical downlink shared channel PDSCH signal, a physical uplink shared channel PUSCH signal, and a physical uplink control channel PUCCH;
determining, by the terminal device, a first symbol set, wherein the first symbol set is a symbol occupied by the first signal or the first symbol set is a union set of the symbol occupied by the first signal and a switching symbol, the switching symbol is located before the symbol occupied by the first signal or after the symbol occupied by the first signal, and a quantity of switching symbols is determined by the first switching time; and
when the first symbol set comprises at least one symbol corresponding to the same time domain resource unit, determining, by the terminal device, that the conflict occurs on the carrier corresponding to the one or more of the n sounding reference signals in the same time domain resource unit.

11. The method according to any one of claims 1 to 10, wherein
the positioning carrier is only used to transmit the sounding reference signal; or
the positioning carrier is only used to transmit the sounding reference signal and a physical random access channel PRACH signal.

12. The method according to any one of claims 1 to 11, wherein
n carriers corresponding to the n sounding reference signals are located in a same band.

13. The method according to any one of claims 1 to 12, wherein the n sounding reference signals share an antenna port or the n sounding reference signals have a phase difference.

14. A communication method, comprising:
determining, by a network device, first configuration information, wherein the first configuration information is used to configure n sounding reference signals, the sounding reference signals are used for positioning, the n sounding reference signals are carried in a same time domain resource unit, a carrier corresponding to at least one of the n sounding reference signals is a positioning carrier, and n is an integer greater than 1; and
sending, by the network device, the first configuration information.

15. The method according to claim 14, wherein before the sending, by the network device, the first configuration information, the method further comprises:
receiving, by the network device, first information, wherein the first information indicates capability information of a terminal device; and
determining, by the network device, the first configuration information based on the first information.

16. The method according to claim 15, wherein the first information comprises at least one of the following:
first indication information, indicating a first maximum aggregated bandwidth, wherein the first maximum aggregated bandwidth is used to send m sounding reference signals, the m sounding reference signals are used for positioning, a carrier corresponding to at least one of the m sounding reference signals is a positioning carrier, the m sounding reference signals are configured to be carried in the same time domain resource unit, and m is an integer greater than 1;
second indication information, indicating a quantity of contiguous carriers corresponding to a first maximum aggregated bandwidth;
third indication information, indicating that the terminal device supports uplink carrier aggregation UL CA, and a carrier set corresponding to the UL CA comprises at least one positioning carrier;
fourth indication information, indicating first switching time, wherein the first switching time is used for switching between sending a signal by the terminal device on a first carrier set and sending a sounding reference signal on a second carrier set, the first carrier set does not comprise a positioning carrier, and the second carrier set comprises at least one positioning carrier;
fifth indication information, indicating that the terminal device does not send m sounding reference signals when a conflict occurs on a carrier corresponding to one or more of the m sounding reference signals in the same time domain resource unit; or
sixth indication information, indicating that the terminal device does not send one or more sounding reference signals when a conflict occurs on a carrier corresponding to the one or more of m sounding reference signals in the same time domain resource unit.

17. The method according to any one of claims 14 to 16, wherein the first configuration information further comprises seventh indication information, and the seventh indication information indicates that the terminal device does not send the n sounding reference signals when a conflict occurs on a carrier corresponding to one or more of the n sounding reference signals in the same time domain resource unit.

18. The method according to any one of claims 14 to 16, wherein the first configuration information further comprises eighth indication information, and the eighth indication information indicates that the terminal device does not send one or more sounding reference signals when a conflict occurs on a carrier corresponding to the one or more of the n sounding reference signals in the same time domain resource unit.

19. The method according to any one of claims 14 to 18, wherein the method further comprises:
sending, by the network device, second information, wherein the second information comprises at least one of the following:
ninth indication information, wherein the ninth indication information indicates that at least one symbol corresponding to the same time domain resource unit is a flexible symbol;
tenth indication information, wherein the tenth indication information indicates that at least one symbol corresponding to the same time domain resource unit is preempted; or
eleventh indication information, wherein the eleventh indication information indicates to transmit a first signal on the carrier corresponding to the one or more of the n sounding reference signals, and the first signal comprises at least one of a physical downlink control channel PDCCH signal, a physical downlink shared channel PDSCH signal, a physical uplink shared channel PUSCH signal, and a physical uplink control channel PUCCH.

20. The method according to any one of claims 14 to 19, wherein
the positioning carrier is not used to transmit the PDCCH signal, the PDSCH signal, the PUSCH signal, or the PUCCH signal.

21. The method according to any one of claims 14 to 20, wherein
the positioning carrier is only used to transmit the sounding reference signal; or
the positioning carrier is only used to transmit the sounding reference signal and a physical random access channel PRACH signal.

22. The method according to any one of claims 14 to 21, wherein
n carriers corresponding to the n sounding reference signals are located in a same band.

23. The method according to any one of claims 14 to 22, wherein the n sounding reference signals share an antenna port or the n sounding reference signals have a phase difference.

24. A communication apparatus, comprising a receiving unit and a sending unit, wherein
the receiving unit is configured to receive first configuration information, wherein the first configuration information is used to configure n sounding reference signals, the sounding reference signals are used for positioning, a carrier corresponding to at least one of the n sounding reference signals is a positioning carrier, and n is an integer greater than 1; and
the sending unit is configured to send the n sounding reference signals based on the first configuration information, wherein the n sounding reference signals are carried in a same time domain resource unit.

25. The apparatus according to claim 24, wherein the sending unit is further configured to send first information, wherein the first information indicates capability information of a terminal device.

26. The apparatus according to claim 25, wherein the first information comprises at least one of the following:
first indication information, indicating a first maximum aggregated bandwidth, wherein the first maximum aggregated bandwidth is used to send m sounding reference signals, the m sounding reference signals are used for positioning, a carrier corresponding to at least one of the m sounding reference signals is a positioning carrier, the m sounding reference signals are configured to be carried in the same time domain resource unit, and m is an integer greater than 1;
second indication information, indicating a quantity of contiguous carriers corresponding to a first maximum aggregated bandwidth;
third indication information, indicating that the terminal device supports uplink carrier aggregation UL CA, and a carrier set corresponding to the UL CA comprises at least one positioning carrier;
fourth indication information, indicating first switching time, wherein the first switching time is used for switching between sending a signal by the terminal device on a first carrier set and sending a sounding reference signal on a second carrier set, the first carrier set does not comprise a positioning carrier, and the second carrier set comprises at least one positioning carrier;
fifth indication information, indicating that the terminal device does not send m sounding reference signals when a conflict occurs on a carrier corresponding to one or more of the m sounding reference signals in the same time domain resource unit; or
sixth indication information, indicating that the terminal device does not send one or more sounding reference signals when a conflict occurs on a carrier corresponding to the one or more of m sounding reference signals in the same time domain resource unit.

27. The apparatus according to any one of claims 24 to 26, wherein the apparatus further comprises a processing unit; and
when the processing unit determines that no conflict occurs on a carrier corresponding to one or more of the n sounding reference signals in the same time domain resource unit, the sending unit is specifically configured to send the n sounding reference signals based on the first configuration information, wherein a first signal comprises at least one of a PDCCH signal, a PDSCH signal, a PUSCH signal, and a PUCCH.

28. The apparatus according to claim 27, wherein
when determining that a conflict occurs on the carrier corresponding to the one or more of the n sounding reference signals in the same time domain resource unit, the processing unit is configured to determine not to send the n sounding reference signals.

29. The apparatus according to claim 27 or 28, wherein the first configuration information further comprises seventh indication information, and the seventh indication information indicates that the terminal device does not send the n sounding reference signals when a conflict occurs on a carrier corresponding to any one of the n sounding reference signals in the same time domain resource unit.

30. The apparatus according to claim 27, wherein
when determining that a conflict occurs on the carrier corresponding to the one or more of the n sounding reference signals in the same time domain resource unit, the processing unit is further configured to determine not to send the one or more sounding reference signals.

31. The apparatus according to claim 27 or 30, wherein the first configuration information further comprises eighth indication information, and the eighth indication information indicates that the terminal device does not send the one or more sounding reference signals when the conflict occurs on the carrier corresponding to the one or more of the n sounding reference signals in the same time domain resource unit.

32. The apparatus according to any one of claims 28 to 31, wherein
the receiving unit is further configured to receive second information, wherein the second information comprises at least one of the following:
ninth indication information, wherein the ninth indication information indicates that at least one symbol corresponding to the same time domain resource unit is a flexible symbol; or
tenth indication information, wherein the tenth indication information indicates that at least one symbol corresponding to the same time domain resource unit is preempted; and
the processing unit is further configured to determine, based on the second information, that the conflict occurs on the carrier corresponding to the one or more of the n sounding reference signals in the same time domain resource unit.

33. The apparatus according to any one of claims 28 to 31, wherein
the receiving unit is further configured to receive eleventh indication information, wherein the eleventh indication information indicates to transmit the first signal on the carrier corresponding to the one or more of the n sounding reference signals, and the first signal comprises the at least one of the physical downlink control channel PDCCH signal, the physical downlink shared channel PDSCH signal, the physical uplink shared channel PUSCH signal, and the physical uplink control channel PUCCH;
the processing unit is further configured to determine a first symbol set, wherein the first symbol set is a symbol occupied by the first signal or the first symbol set is a union set of the symbol occupied by the first signal and a switching symbol, the switching symbol is located before the symbol occupied by the first signal or after the symbol occupied by the first signal, and a quantity of switching symbols is determined by the first switching time; and
when determining that the first symbol set comprises at least one symbol corresponding to the same time domain resource unit, the processing unit determines that the conflict occurs on the carrier corresponding to the one or more of the n sounding reference signals in the same time domain resource unit.

34. The apparatus according to any one of claims 24 to 33, wherein
the positioning carrier is only used to transmit the sounding reference signal; or
the positioning carrier is only used to transmit the sounding reference signal and a physical random access channel PRACH signal.

35. The apparatus according to any one of claims 24 to 34, wherein
n carriers corresponding to the n sounding reference signals are located in a same band.

36. The apparatus according to any one of claims 26 to 35, wherein the n sounding reference signals share an antenna port or the n sounding reference signals have a phase difference.

37. A communication apparatus, comprising a processing unit and a transceiver unit, wherein
the processing unit is configured to determine first configuration information, wherein the first configuration information is used to configure n sounding reference signals, the sounding reference signals are used for positioning, the n sounding reference signals are carried in a same time domain resource unit, a carrier corresponding to at least one of the n sounding reference signals is a positioning carrier, and n is an integer greater than 1; and
the transceiver unit is configured to send the first configuration information.

38. The apparatus according to claim 37, wherein
the transceiver unit is further configured to receive first information, wherein the first information indicates capability information of a terminal device; and
the processing unit is further configured to determine the first configuration information based on the first information.

39. The apparatus according to claim 38, wherein the first information comprises at least one of the following:
first indication information, indicating a first maximum aggregated bandwidth, wherein the first maximum aggregated bandwidth is used to send m sounding reference signals, the m sounding reference signals are used for positioning, a carrier corresponding to at least one of the m sounding reference signals is a positioning carrier, the m sounding reference signals are configured to be carried in the same time domain resource unit, and m is an integer greater than 1;
second indication information, indicating a quantity of contiguous carriers corresponding to a first maximum aggregated bandwidth;
third indication information, indicating that the terminal device supports uplink carrier aggregation UL CA, and a carrier set corresponding to the UL CA comprises at least one positioning carrier;
fourth indication information, indicating first switching time, wherein the first switching time is used for switching between sending a signal by the terminal device on a first carrier set and sending a sounding reference signal on a second carrier set, the first carrier set does not comprise a positioning carrier, and the second carrier set comprises at least one positioning carrier;
fifth indication information, indicating that the terminal device does not send m sounding reference signals when a conflict occurs on a carrier corresponding to one or more of the m sounding reference signals in the same time domain resource unit; or
sixth indication information, indicating that the terminal device does not send one or more sounding reference signals when a conflict occurs on a carrier corresponding to the one or more of m sounding reference signals in the same time domain resource unit.

40. The apparatus according to any one of claims 37 to 39, wherein the first configuration information further comprises seventh indication information, and the seventh indication information indicates that the terminal device does not send the n sounding reference signals when a conflict occurs on a carrier corresponding to one or more of the n sounding reference signals in the same time domain resource unit.

41. The apparatus according to any one of claims 37 to 40, wherein the first configuration information further comprises eighth indication information, and the eighth indication information indicates that the terminal device does not send the one or more sounding reference signals when the conflict occurs on the carrier corresponding to the one or more of the n sounding reference signals in the same time domain resource unit.

42. The apparatus according to any one of claims 37 to 41, wherein
the transceiver unit is further configured to send second information, wherein the second information comprises at least one of the following:
ninth indication information, wherein the ninth indication information indicates that at least one symbol corresponding to the same time domain resource unit is a flexible symbol;
tenth indication information, wherein the tenth indication information indicates that at least one symbol corresponding to the same time domain resource unit is preempted; or
eleventh indication information, wherein the eleventh indication information indicates to transmit a first signal on the carrier corresponding to the one or more of the n sounding reference signals, and the first signal comprises at least one of a physical downlink control channel PDCCH signal, a physical downlink shared channel PDSCH signal, a physical uplink shared channel PUSCH signal, and a physical uplink control channel PUCCH.

43. The apparatus according to any one of claims 37 to 42, wherein
the positioning carrier is not used to transmit the PDCCH signal, the PDSCH signal, the PUSCH signal, or the PUCCH signal.

44. The apparatus according to any one of claims 37 to 43, wherein
the positioning carrier is only used to transmit the sounding reference signal; or
the positioning carrier is only used to transmit the sounding reference signal and a physical random access channel PRACH signal.

45. The apparatus according to any one of claims 37 to 44, wherein
n carriers corresponding to the n sounding reference signals are located in a same band.

46. The apparatus according to any one of claims 37 to 45, wherein the n sounding reference signals share an antenna port or the n sounding reference signals have a phase difference.

47. A communication apparatus, comprising at least one processor coupled to a memory, wherein
the memory is configured to store a program or instructions; and
the at least one processor is configured to execute the program or the instructions, to enable the apparatus to implement the method according to any one of claims 1 to 13; or
the at least one processor is configured to execute the program or the instructions, to enable the apparatus to implement the method according to any one of claims 14 to 23.

48. A computer-readable storage medium, wherein the medium stores instructions, and when the instructions are executed by a computer, the method according to any one of claims 1 to 23 is implemented.
